# EUROPEAN PATENT SPECIFICATION

(11) **EP 3 331 196 B1**
(45) Date of publication and mention of the grant of the patent: **24.04.2019**
(21) Application number: 16201434.4
(22) Date of filing: 30.11.2016
(51) Int. Cl.: H04L 12/14, H04M 15/00

(54) **TELECOMMUNICATION SYSTEM FOR MONITORING AND CONTROLLING OF A NETWORK PROVIDING RESOURCE TO A USER**
TELEKOMMUNIKATIONSSYSTEM ZUR ÜBERWACHUNG UND STEUERUNG EINES NETZWERKS MIT RESSOURCENBEREITSTELLUNG AN EINEN BENUTZER
SYSTÈME DE TÉLÉCOMMUNICATIONS DE SURVEILLANCE ET DE COMMANDE D'UN RÉSEAU FOURNISSANT DES RESSOURCES À UN UTILISATEUR

(43) Date of publication of application: 06.06.2018
(73) Proprietor: SAP SE, 69190 Walldorf (DE)
(72) Inventor: LANG, Georg, 69190 Walldorf (DE); KAUFMANN, Artur, 69190 Walldorf (DE); GOLEC, Adrian, 69190 Walldorf (DE)
(74) Representative: Richardt Patentanwälte PartG mbB

(56) References cited:
- WO-A2-2009/016580
- US-A1- 2015 308 856
- US-B1- 8 359 389

## Description

### Technical Field

This invention relates to telecommunication processing systems. In particular, this invention relates to a flexible and efficient telecommunication system for monitoring and controlling a network providing resources to users.

### Background

In telecommunications, rating is an activity that determines the cost of chargeable events, such as a cost of service usage, a telephone call, a text message, a data download, a purchase, and the like. Rating may also be performed with regard to other services, such as radio-monitored toll ways, public transit, and the like. Telecommunication access points, turnstiles, and other access points for chargeable events typically generate usage data, in the form of various data items describing consumption/usage of various resources. Examples of such data items include Call Detail Records (CDR), Event Detail Records (EDR), Usage Detail Records (UDR), and Internet Protocol Detail Records (IPDR). These data items are sent to, or retrieved by, various processing systems. Afterwards, rating systems determine charge amounts for the received data items. The cost of the events is then provided to, or retrieved by, an invoicing process.

The US 2015/308856 A1 discloses a method and system for monitoring resource information and user activity. The method includes acquiring one or more data streams from one or more resource meters and one or more electronic device sensors. Discrete events are computed from each data stream. A sequence of discrete sensor-meter event itemsets are extracted based on the events. Frequent sensor-meter event itemsets are discovered from the sequence of discrete event itemsets that occur together, and a frequency of occurrence of each frequent co-occurrence itemset is discovered. Rising sensor-meter event itemsets and falling sensor-meter event itemsets are matched based on appliance state models and the frequency of occurrence of each sensor-meter event itemset. Each individual fixture is identified. Each fixture cluster is classified to a fixture category. Based on the matched fixture events, fixture clusters, and categories, resource usage information and user activities are determined for each fixture usage event identified.

### Summary

Resource usage record (RUR) is, as understood here, is a data item comprising a specification of a resource used/consumed. It can further comprise at least one or the following, a quantity of the resource used/consumed, a specification of date and time when the usage/consumption of the resource took place, a specification of a time interval in which the usage/consumption took place, and an identification information. The identification information can comprise at least one of the following: a device identification of a device which has generated the RUR, device identifications of devices, if any, connected to or operated by the device which has generated the RUR.

The disclosure generally describes computer-implemented methods, computer-readable media, and telecommunication systems for processing of data representing events of resource consumptions, e.g. RURs, CDRs, IPDRs, EDRs etc. The processing of data is used for monitoring and controlling networks providing resources to users. The data to be processed can have different formats; in addition it can be related to consumption of different resources. As usual the processing of RURs and alike is related to contracts of users. A straightforward approach can be based on processing of each RUR. The rating of a single RUR on a basis of this approach requires identification of a user to whom the RUR is assigned, retrieving of a rule for processing of the RUR from a contract of the identified user, generating a charge amount for the RUR using the retrieved billing rule, sending signals/instructions to components generating RURs for monitoring and/or controlling of a consumption/usage of resources provided to users. This discrete processing of RURs can be inefficient, when compared with batch processing of RURs. Implementation of a batch processing on a basis of this approach can require aggregation of RURs assigned to a particular user and calculating charge amounts for the aggregated RURs using processing rules retrieved from a contract of said user. This way of batch processing has as a number of disadvantages as well. Aggregation of RURs assigned to a user requires processing of heterogeneous data, because the user can use different resources like electricity and video on demand, which can originate from different providers. As a result thereof batch processing of RURs can be compromised by the need to process heterogeneous data. Application of this approach is quite difficult when there is a need to take into account parameters related to cumulative consumption/usage of a resource by a plurality of users. This data can be very important for monitoring and managing of loading of various segments of an electricity distribution grid. Effective group management of electricity consumption of users connected to a particular segment of a grid can be very important for preventing overloading of the segment of the grid. Another disadvantage of the aforementioned approach is a problem of data protection. User data, such as user contracts, is addressed in each event of RUR rating. As a result the rating system has to comprise extra data protection means in order to avoid unauthorized disclosure of the user data, which can be caused by e.g. hacker attacks. Moreover, application of the correct billing rule for the rating of a particular RUR requires that this RUR comprises user identification data or data which can be used for user identification by a system configured to receive and process RURs. This causes another problem of user data protection, because users are concerned about details of their resource consumption disclosed to unauthorized parties. A straightforward solution of this problem can require utilization of additional hardware and/or software means for data protection in the system for receiving and processing of RURs and/or for secure data exchange between network components configured to generate RURs and the system for receiving and processing of RURs. The secure data exchange can be very difficult to implement when a network component is a simple device for registering water or electricity consumption, in particular when the network component is a legacy device supporting only internet protocols, which cannot provide the secure data exchange.

Processing of RURs according to present invention enables avoiding the aforementioned disadvantages. There is no need to generate RURs comprising user identification. RUR can comprise information which is sufficient for identification of at least one of the following: a user type (e.g. private, public, corporate, municipal, user having a postpaid billing schedule, user having a prepaid billing schedule, user located in a particular area, etc.), a type of resource (e.g. gas, electricity, water, internet, video on demand, telephone communication, etc.), and a network component, which has generated the RUR (e.g. device identification). Received RURs are translated into records in a database. The record in the database comprises a resource usage description and an identification information comprised in the original RUR, further it is associated in the database with the user type and the resource type both identified using the original RUR. The resource usage description can comprise a specification of a resource consumed/used and a quantity of the resource consumed/used. In addition the resource usage description can comprise a specification of date and/or time when the resource is consumed/used and/or specification of time interval in which the resource is consumed/used. The resource usage description can be for instance a number of kilowatt hours of electricity consumed by home appliances of a user in a specific interval of time, a bank transfer specifying an amount of money transferred and a day of transfer, a specification of a phone call made (e.g. CDR), a description of a rented car and a specification of a car rental period. This way of data processing does not enable authorized parties having access to the database and/or traffic of RURs to reconstruct a user profile comprising consumption/usage of various resources by a particular user.

The records are aggregated by user type and/or the resource type for rating thereby enabling generation of charge amounts using one billing rule. As a result thereof the rating system can process batch wise data of the same type. The generated charge amounts are appended to the same records, which were used for generation of charge amounts. This feature provides for consistency of data in an efficient way. The rating system can store only billing rules. The billing rules are assigned to specific resource types and/or user types. When an authorized party gets access to the rating process and/or components providing the billing process it is not possible to reconstruct the aforementioned user profile.

The contracts of users can be constructed out of the billing rules. They can be stored in an invoicing system being the only one component which stores user identification data assigned to billing information of users. As a result there is no need for advanced data protection for information exchange between various components. The invoicing system receives invoice data by communicating a list of device identifications of network components assigned to a particular user. The list as such does not contain any information related to the user identification data such as names, addresses, etc. In the other words the list is anonymous. The records are aggregated according to the list and billing relevant data comprised therein is transmitted to the invoicing system. This way of contract formulation provides for an effective implementation of changes in the contracts. Macro changes, i.e. changes affecting groups of users, can be implemented by changing billing rules. As usual such changes are initiated by resource providers. Changes related to a particular user can be implemented by changing an identification procedure for identifying user types and resource types using information comprised in RURs received from a particular network component. As a result next RUR received from the network component will result in the generation of a record associated with a different user type and/or a different resource. In addition, the telecommunication system comprises various functionalities related to interaction with users in cases when billing rules are changed and/or a user response related to changes in billing rules is required. As it will be shown further in description, users can select different billing rules offered by the telecommunication system or get notifications related to changes in billing rules without a risk of getting their confidential information disclosed to unauthorized parties. Yet another advantage of the claimed invention is a straightforward aggregation of billing data per user. This is of particular advantage for convergent billing. In any case, it is much more practical for almost any user to receive one bill for usage of different resources provided by different providers instead of receiving a separate bill from each provider. Another advantageous functionalities of the present invention like monitoring and managing of resource consumption/utilization, effective processing of down payments in combination with offset recurring charges in variable billing cycles are discussed further.

It is an objective of embodiments of the invention to provide for a telecommunication system configured to provide effective and secure processing of data related to resource usage, a computer-implemented method for performing same, and a computer readable medium having stored thereon a computer executable program code for executing the computer-implemented method.

According to one embodiment, the present invention relates to a computer-implemented method for processing of resource usage records, RURs, in a telecommunication system comprising a rating system, a database, a processing system, and a network component configured to generate the RURs, each of the RURs comprising a resource usage description of usage of one of resources and an identification information comprising a device identification of the network component. The database is configured to store records. The processing system is configured to store device identifications each being assigned to a respective user type. The method comprises the following steps performed by the processing system: receiving a RUR from the network component for a resource provided to a user, identifying a resource type of the resource by using a resource usage description comprised in the received RUR, identifying a user type of the user by using an identification information comprised in the received RUR, wherein the identified user type is assigned to a device identification comprised in the identification information comprised in the received RUR, generating a record in the database, the record comprising the resource usage description comprised in the received RUR, the identification information comprised in the received RUR, the record being associated with the identified resource type and the identified user type, selecting records in the database, each complying with a selection criterion specifying that a record to be selected is associated with a resource type assigned to the selection criterion and a user type assigned to the selection criterion, and sending batch data to the rating system, the batch data comprising resource usage descriptions, each comprised in the respective selected record, the method further comprises the following steps being performed by the rating system in response to receiving of the batch data from the processing system: generating a charge amount for each of the resource usage descriptions comprised in the batch data, and sending a billing data to the processing system, the billing data comprising the charge amounts.

According to another embodiment, the present invention relates to a computer readable medium having stored thereon a computer executable code for execution by a computer processor controlling a control system, wherein execution of the instructions of the executable code causes the computer processor to execute the computer-implemented method of the aforementioned embodiment.

According to another embodiment, the present invention relates to a telecommunication system comprising a rating system, a processing system, a database, and a network component configured to generate resource usage records, RURs, each comprising a resource usage description of usage of one of resources and an identification information comprising a device identification of the network component. The processing system is configured to store device identifications each being assigned to a respective user type. The database is configured to store records. The processing system is configured to perform the following steps: receiving a RUR from the network component for a resource provided to a user, identifying a resource type of the resource by using a resource usage description comprised in the received RUR, identifying a user type of the user by using an identification information comprised in the received RUR, wherein the identified user type is assigned to a device identification comprised in the identification information comprised in the received RUR, generating a record in the database, the record comprising the resource usage description comprised in the received RUR, the identification information comprised in the received RUR, the record being associated with the identified resource type and the identified user type, selecting records in the database according to a selection criterion specifying that a record to be selected is associated with a resource type assigned to that selection criterion and a user type assigned to that selection criterion, and sending batch data to the rating system, the batch data comprising resource usage descriptions, each comprised in the respective selected record. The rating system is configured to perform the following steps in response to receiving of the batch data from the processing system: generating a charge amount for each of the resource usage descriptions comprised in the batch data, and sending a billing data to the processing system, the billing data comprising the charge amounts.

According to another embodiment, the present invention relates to a telecommunication system for controlling a distribution of a resource via a distribution grid consisting of segments, the telecommunication system comprising a rating system, a processing system, a database, and network components configured to control consumption of the resource and to generate resource usage records, RURs, wherein each RUR comprises a resource consumption description of the resource delivered via the distribution grid an identification information comprising a device identification of a network component which has generated the each RUR. The processing system is configured to perform the following steps: receiving a RUR from one of the network components for the resource consumed by a user, identifying a segment of the distribution grid and a user type of the user by using an identification information comprised in the received RUR, generating a record in a database, the record comprising a resource consumption description comprised in the received RUR and the identification information comprised in the received RUR, the record being associated with the identified resource type and the identified user type. The rating system is configured to generate charge amounts for resource usage consumption descriptions comprised in records complying with a selection criterion specifying that a record to be selected has the identified user type and the identified segment. The processing system is configured to perform the following steps in response to receiving of a request to change the billing rule: changing the billing rule according to the request, selecting records according to the selection criterion, identifying device identifications comprised in the selected records, sending a description of the changed billing rule to network components which device identifications are identified. At least one of the network components is configured to perform the following in response to receiving of the description: adapting control of the resource consumption according to the received description.

According to another embodiment, the rating system is configured to generate charge amounts for resource usage description comprised in batch data according to billing rules, wherein each of the billing rules is assigned to a respective selection criterion of a set of selection criteria comprising the selection criterion, wherein the rating system is configured to perform the following step in response to receiving of the batch data from the processing system: identifying a billing rule assigned to the selection criterion, wherein the generating of the charge amount for each of the resource usage descriptions comprised in the batch data is executed according to the identified billing rule.

According to another embodiment, the rating system is configured to generate charge amounts for resource usage descriptions comprised in batch data according to billing rules each having a resource usage specification, wherein each of the billing rules is assigned to a respective selection criterion of a set of selection criteria comprising the selection criterion, wherein the resource type assigned to the selection criterion is the identified resource type and the user type assigned to the selection criterion is the identified user type, wherein the rating system is configured to perform the following in response to receiving the of batch data from the processing system: identifying a billing rule assigned to said selection criterion, wherein the generating of the charge amount for each of the resource usage descriptions comprised in the batch data is executed according to the identified billing rule, wherein the rating system is configured to perform the following steps in response to receiving the batch data from the processing system: selecting another billing rule when the resource usage description comprised in the received RUR does not comply with a resource usage specification of the identified billing rule and complies with a resource usage specification of the another billing rules, wherein the another billing rule is assigned to another selection criterion, wherein another user type and the identified resource type are assigned to the another selection criterion, sending to the processing system a notification request comprising a description of the another billing rule, wherein the processing system is configured to perform the following in response to receiving the notification request: sending to the network component a notification message comprising the description of the another billing rule, the network component is configured to perform the following steps in response to receiving of the notification message: prompting the user as to whether the user wishes to approve the another billing rule, sending to the processing system a response message indicating that the user has approved the another billing rule, when the user has approved the another billing rule, wherein the processing component is configured to perform the following in response to receiving of the response message: executing a reconfiguration procedure causing the processing system to identify the another user type in further execution of the identifying of a user type of a user by using an identification information comprised in another received RUR, when the another received RUR is received from the network component for the resource provided to the user.

According to another embodiment, the selecting of the records in the database and the sending of the batch data to the rating system is executed according to a schedule and/or when an overall number of records in the database complying with the selection criterion is bigger than a predefined value.

According to another embodiment, the selection criterion specifies a predefined time interval in which a resource specified in a resource usage description comprised in a record to be selected is used.

According to another embodiment, the selection criterion specifies that a record to be selected comprises a resource usage description for which the charge amount is not yet generated.

According to another embodiment, the processing system is configured to perform the following step in response to receiving of the billing data from the rating system: appending each of the charge amounts to the respective record comprising the resource usage description for which the each of the charge amounts is generated, wherein the telecommunication system further comprises an invoicing system being configured to perform the following at an end of a billing cycle assigned to the user: sending to the processing system an invoice data request comprising a record selection criterion assigned to the user and the billing cycle, the processing system being configured to perform the following steps in response to receiving of the invoice data request: selecting other records in the database each comprising an identification information complying with the record selection criterion, a charge amount, and a resource usage description indicating that a resource used according to that resource usage description is used during the billing cycle, sending invoice data to the invoicing system, the invoice data comprising charge amounts, each comprised in the respective another record, the invoicing system being configured to perform the following step in response to receiving of the invoice data: generating an invoice using the invoice data.

According to another embodiment, the generating of the charge amount for each of the resource usage descriptions comprised in the batch data is executed according to a billing rule assigned to the selection criterion. The processing system being configured to perform the following step in response to receiving the invoice data request: associating each of the other records with a data marker indicating that the charge amount comprised in the each of the other records is used for invoicing. The wherein the processing system is configured to perform the following steps in response to receiving of a request to assign another billing rule to the selection criterion: cancelling the assigning of the billing rule to the selection criterion, assigning the another billing rule to the selection criterion, repeating the selecting of records in the database according to the selection criterion, and sending another batch data to the rating system, wherein the another batch data comprises resource usage descriptions, each comprised in the record selected in the repeating of the selecting of the records in the database according to the selection criterion. The rating system is configured to perform the following steps in response to receiving of the another batch data from the processing system: generating a charge amount for each of the resource usage descriptions comprised in the another batch data using the another billing rule, and sending another billing data to the processing system, the billing data comprising the charge amounts generated in the generating of the charge amount for each of the resource usage descriptions comprised in the another batch data. The processing system is configured to perform the following step in response to receiving of the another billing data from the rating system: appending each of the charge amounts comprised in the another billing data to the respective record comprising the resource usage description for which the each of the charge amounts comprised in the another billing data is generated when the respective record comprising the resource usage description for which the each of the charge amounts comprised in the another billing data is generated does not comprise the charge amount or the respective record comprising the resource usage description for which the each of the charge amounts comprised in the another billing data is generated is associated with the data marker, otherwise substituting a charge amount comprised in the respective record comprising the resource usage description for which the each of the charge amounts comprised in the another billing data is generated by the each of the charge amounts comprised in the another billing data.

According to another embodiment, the invoicing system being configured to perform the following step at an end of another billing cycle assigned to the user: sending to the processing system another invoice data request comprising the record selection criterion and the another billing cycle. The processing system being configured to perform the following steps in response to receiving of the invoice data request: selecting other records in the database each comprising either an identification information complying with the record selection criterion, only one charge amount, and a resource usage description indicating that a resource used according to that resource usage description is used during the another billing cycle or an identification information complying with the record selection criterion and charge amounts, and sending another invoice data to the invoicing system, the invoice data comprising charge amounts each comprised in the respective another record selected in the selecting of the other records in the database each comprising either an identification information complying with the record selection criterion, only one charge amount, and the resource usage description indicating that the resource used according to that resource usage description is used during the another billing cycle or the identification information complying with the record selection criterion and the charge amounts, wherein the charge amounts comprised in the same record are associated with each other in the another invoice data. The invoicing system being configured to perform the following step in response to receiving of the another invoice data: generating another invoice using the another invoice data. The generating of the another invoice using the another invoice data comprises: specifying a charge amount in the another invoice when that charge amount does not have an associated charge amount in the another invoice data, and specifying a differential charge amount in the another invoice for the associated charge amounts, wherein the differential charge amount is equal to one of the associated charge amounts minus another one of the associated charge amounts, wherein the one of the associated charge amounts is generated after the another one of the associated charge amounts.

According to another embodiment, the identification information of the received RUR comprises a device identification of the network component. The telecommunication system comprises a resource provider system configured to generate RURs related to basic fees for providing access to the resource for the user. The resource provider system is configured to perform the following step: sending another RUR to the processing system, the another RUR comprising an identification information and a resource usage description. The identification information comprised in the another RUR comprises the device identification of the network component. The resource usage description comprised in the another RUR comprises a basic fee for providing access to the resource and a description of the resource. The processing system is configured to perform the following steps: receiving the another RUR from the resource provider system, identifying a resource type of the resource by using the resource usage description comprised in the another RUR, identifying a user type of the user by using the identification information comprised in the another RUR, generating another record in the database. The another generated record comprises the resource usage description comprised in the another RUR, the identification information comprised in the another RUR, a charge amount being equal to the basic fee comprised in the resource usage description comprised in the another RUR. The another record is associated with the resource type identified in the identifying of resource type of the resource by using the resource usage description comprised in the another RUR and the user type identified in the identifying of the user type of the user by using the identification information comprised in the another RUR.

According to another embodiment, the identification information of the received RUR comprises a device identification of the network component, wherein the record generated in the step of the generating of the record in the database is assigned to the device identification, wherein the record selection criterion comprises a list of device identifications, wherein the record selection criterion specifies that an identification information of a record to be selected comprises any one of the device identifications of the list.

According to another embodiment, the rating system is configured to generate charge amounts for resource usage descriptions comprised in batch data according to billing rules each having a cumulative resource usage specification, wherein each of the billing rules is assigned to a respective selection criterion of a set of selection criteria comprising the selection criterion, wherein the rating system is configured to perform identifying a billing rule assigned to said selection criterion in response to receiving of the batch data from the processing system, wherein the generating of the charge amount for each of the resource usage descriptions comprised in the batch data is executed according to the identified billing rule, wherein the invoice data comprises resource usage descriptions, each comprised in the respective another record, wherein the invoicing system is configured to perform the following steps: calculating a cumulative resource usage volume using the resource usage descriptions in the invoice data each having the respective charge amount generated using the identified billing rule, selecting another billing rule when the cumulative resource usage volume complies with a cumulative resource usage specification of the another rule, wherein the another billing rule is assigned to another selection criterion, wherein another user type and the identified resource type are assigned to the another selection criterion, prompting the user as to whether the user wishes to approve the another bulling rule, sending to the processing system a request to use the another billing rule for the user when the user has approved the another billing rule, wherein the processing system is configured to perform the following steps in response to receiving of the request to use the another billing rule for the user: executing a reconfiguration procedure causing the processing system to identify the another user type in further execution of the identifying of a user type of a user by using an identification information comprised in another received RUR, when the another received RUR is received for the resource provided to the user from any of the network components having a device identification comprised in the list of device identifications.

According to another embodiment, the identification information of the received RUR comprises a device identification of the network component, wherein the record generated in the step of the generating of the record in the database is associated with the device identification, wherein the generating of the charge amount for each of the resource usage descriptions comprised in the batch data is executed according to a billing rule assigned to the selection criterion, wherein the processing system is configured to perform the following in response to receiving of a request to assign another billing rule to the selection criterion: cancelling the assigning of the billing rule to the selection criterion, assigning the another billing rule to the selection criterion, sending a notification message to network components of the telecommunication system, each having device identification assigned to the respective selected record, the notification message comprises a description of the another billing rule.

According to another embodiment, the request to assign the another billing rule to said selection criterion is received from a resource provider.

According to another embodiment, a network component of the telecommunication system is configured to perform the following step in response to receiving of the notification message: sending a communication signal to a user, the communication signal comprises the description of the another billing rule.

According to another embodiment, the processing system is configured to perform the following in response to receiving of the request to assign the another billing rule to said selection criterion: sending a configuration instruction to the rating system to use the another billing rule for generation of charge amounts comprised in batch data comprising resource usage descriptions comprised in records selected according to the selection criterion. The rating system is configured to perform the following in response to receiving of the configuration instruction: executing a reconfiguration procedure causing the rating system to generate charge amounts using the another billing rule in further execution of the generating of a charge amount for each of resource usage descriptions comprised in another received batch data when the another received data comprises resource usage descriptions comprised in records selected according to the selection criterion.

According to another embodiment, the rating system is configured to generate charge amounts for resource usage descriptions comprised in batch data according to billing rules each having a cumulative resource usage specification, wherein each of the billing rules is assigned to a respective selection criterion of a set of selection criteria comprising the selection criterion, wherein the rating system is configured to perform the following steps in response to receiving of the batch data from the processing system: calculating a cumulative resource usage volume using the batch data, preforming the following when the cumulative resource usage volume does not comply with a cumulative resource usage specification of a billing rule assigned to the selection criterion: selecting anther billing rule, wherein the cumulative resource usage volume complies with a cumulative resource usage specification of the another billing rule, cancelling the assigning of the billing rule to the selection criterion, assigning the another billing rule to the selection criterion, wherein the charge amounts in the generating of the charge amount for the each of the resource usage descriptions comprised in the batch data are generated using the another billing rule when the cumulative resource usage volume complies with the cumulative resource usage specification of the another billing rule, wherein the charge amounts in the generating of the charge amount for the each of the resource usage descriptions comprised in the batch data are generated using the billing rule when the cumulative resource usage volume complies with the cumulative resource usage specification of the billing rule.

According to another embodiment, the identification information of the received RUR comprises a device identification of the network component, wherein the record generated in the step of the generating of the record in the database is associated with the device identification, wherein the rating system is configured to perform the following steps in response to receiving of the batch data from the processing system: sending to the processing system a notification request comprising a description of the another billing rule when the cumulative resource usage volume does not comply with the cumulative resource usage specification of the billing rule assigned to the selection criterion. The processing system is configured to perform the following in response to receiving of the notification request: sending a notification message to network components of the telecommunication system, each having device identification assigned to the respective selected record, the notification message comprising the description of the another billing rule.

The details of one or more implementations of the subject matter of this specification are set forth in the accompanying drawings and the description below. Other features, aspects, and advantages of the subject matter will become apparent from the description, the drawings, and the claims.

### Brief Description of the Drawings

FIG. 1 is a block diagram illustrating an example environment for processing of data related to resource usage.
FIG. 2 shows a flowchart of an example method.
FIG. 3 shows a flowchart of an example method.
FIG. 4 shows a flowchart of an example method.
FIG. 5 shows a flowchart of an example method.
FIG. 6 shows a flowchart of an example method.
FIG. 7 shows a flowchart of an example method.
FIG. 8 shows a flowchart of an example method.
FIG. 9 shows a flowchart of an example method.
FIG. 10 shows a flowchart of an example method.

### Detailed Description

This disclosure generally describes computer-implemented methods, computer-readable media, and telecommunication systems for processing of data related to resource usage. A resource usage event can be specified as a RUR comprising at least one of the following a resource usage description and an identification information. Various components of the telecommunication systems are configured to perform specific steps of the computer-implemented methods. As it will be clearly seen from the following description, the distribution of the workload of processing of the resource usage events provides for an improvement of productivity and an advanced data protection.

The following description is presented to enable any person skilled in the art to practice the disclosed subject matter, and is provided in the context of one or more particular implementations. Various modifications to the disclosed implementations will be readily apparent to those skilled in the art, and the general principles defined herein may be applied to other implementations and applications without departing from scope of the disclosure. Thus, the present disclosure is not intended to be limited to the described and/or illustrated implementations, but is to be accorded the widest scope consistent with the principles and features disclosed herein.

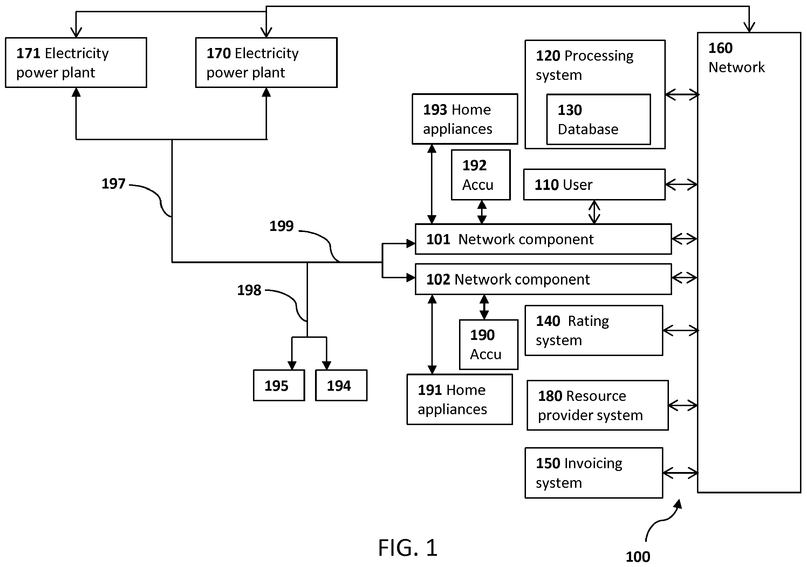

FIG. 1 illustrates an example environment 100 for processing of data related to consumption/usage of resources. The example environment comprises a one or more network components 101, 102, a processing system 120, a database 130 which can be comprised in a processing system 120, a rating system 140, an invoicing system 150, a resource provider system 180, and one or more computer networks 160. The computer networks can comprise one or more wireless networks and/or one or more wired networks. The wireless network can be a WiFi or a digital cellular telecommunication network. Utilization of the latter for providing communication between network components and the processing system can provides for an effective operation of a plurality of network components. The network components can register and/or control consumption/usage of various resources. They can be installed in various (remote) locations. In this case wireless communication eliminates the need to provide a wired connection to each of the network components. The one or more networks 160 provide communication between the network components and the processing system, between the processing and the database when the latter is implemented a remote device, between the processing system and the rating system, between the processing system and the invoicing system, between the resource provider system and various components of the example environment such as the rating system, the invoicing system, the processing system, one or more resource generating facilities 170, 171, and one or more network components, and if necessary between the rating system and the invoicing system. The resource providing facilities can be for instance electricity power plants as depicted on Fig. 1. Alternatively the resource providing facilities can be base stations of a digital cellular telecommunication network. The resource provider system can distribute to new billing rules via one or more computer networks 160 to various components of the example environment such as the network components 101, 102, the rating system 140, the processing system 120. Alternatively or in addition, the resource provider system can modify a billing rule used by any of the aforementioned components. The distribution of the new billing rules or modification of the currently used billing rules can be executed by the resource provider system on a basis of information received from the resource generation facilities 171, 170. The received information can indicate availability of resources at the resource generation facilities. In one example the availability of resources can be determined by a supply-demand situation on a market of the resources, wherein high demand of a resource drives its price high and low demand of the resources drives its price low.

The one or more networks 160can further provide for a communication between the user 100 and an invoicing system150. One or more networks components can comprise means for communication with the user 110. This can be implemented by hardware user interfaces comprised in some of the network components and/or by communicating with devices operated by the user, e.g. a smartphone. The communication between the device operated by the user and the network component can be implemented via the one or more computer networks 160. The network components are configured to generate RURs being descriptive of events of usage/consumption of resources by users. Each RUR comprises a resource usage description and an identification information. The resource usage description specifies a resource used/consumed by a user and/or quantity of a resource used/consumed by the user. The identification information can comprise a device identification of a network component which has generated a RUR. The network components can be installed at different nodes of various distribution networks and/or grids 197 providing to users resources like water, electricity, and gas. In this case the identification information comprised in a RUR generated by such a network component can comprise information enabling determination a node and/or segment 199, 198 of the network to which the network component is connected. Fig. 1 depicts network components 101 and 102 connected to a segment 199 of the grid 197. The grid comprises another segment 198. Other users 195, 194 are connected to a segment 198 of the grid.

The network component can be for instance a handheld mobile device configured to generate RURs related to internet traffic provided to the handheld mobile device or a telephone call made using the handheld mobile device. Another network component can be an electricity or water usage meter. Some of the network components can be configured to manage/control consumption of a resource like electricity. Such a network component can be a smart home appliance causing an electrical accumulator to provide electricity stored in an accumulator for usage by other home appliances when a price of electricity is higher than a threshold price and causing the electrical accumulator to charge from a grid when the price of electricity is lower than another threshold price. The network component 101 (102) can be such a smart home appliance electricity meter. The network component is configured to generate RURs related to electricity consumed by home appliances 193 (191) and for charging the electrical accumulator 192 (190). The network component is connected to the segment 199 of the electricity distribution grid 197. The network component is configured to receive billing rules from the resource provider system 180 via a computer network 160. The billing rule can specify a current price of electricity and/or pricing of electricity versus time for an interval of time in the future. For instance the billing rule can comprise a day electricity tariff and a night electricity tariff for tomorrow, for coming week, or for coming month. Depending on the current price and/or future pricing the network component can manage the following options for electricity consumption: in a first case when the current price of electricity of below a first price the network component can cause charging of the electrical accumulator, in a second case when the current price of electricity is higher than a second price the network component can provide electricity stored in the electrical accumulator for consumption by home appliances 193 as alternative to electricity delivered via the segment 199 of the electrical grid 197 thereby reducing or preventing consumption of the electricity delivered to the home appliances 193 via the segment 199, wherein the second price is higher than the first price.

The processing system is configured to receive RURs and generate records in database using information comprised in the received RURs. It is further configured to select the records according to selection criteria and send information in the selected records to the rating system or to the invoicing system. The rating system is configured to generate charge amounts using information received from the processing system and to send the generated charge amounts to the processing system. The processing system is configured to receive the charge amounts from the rating system and to append them to the records. The invoicing system is configured to generate invoices using data received from the processing system. The resource provider system is configured to monitor a consumption/usage of a resource by receiving information related to the consumption/usage of the resource from the processing system, monitor availability of the resource by communicating with the resource generation facilities, to generate new billing rules (and/or to change currently used billing rules) on a basis of the availability of the resource and an overall consumption of the resource calculated using the information received from the processing system, and to distribute the new billing rules (and/or changes in the currently used billing rules) to components of the example environment 100, such as the network components, 101, 102, the invoicing system 150, the rating system 140, and the processing system 120.

Usage/consumption of resource can be related to fixed (periodic) costs (e.g. incidental costs, basic fees) which are not related to an actual usage/consumption of the resource. An example of such a cost can be a payment for connection of a user device to a resource distribution network. For instance, a telecom provider can request a fixed amount to be payed when a user purchases a new SIM card for his mobile phone. The provider can further request another fixed amount to be paid on a periodic basis with independent of duration of telephone calls, if any, made using the purchased SIM card. Users having prepaid accounts by telecom providers can pay fixed amounts per month even if they do not use services of the telecom providers at all. In order to address this demand, the resource provider system and/or the invoicing system can be configured to generate RURs and send them to the processing system. In its own turn the processing system can be configured to receive the RURs from the resource provider system and process them in the same way as the RURs received from the network components.

The invoicing system can be configured to generate RURs in other cases as well. These RURs can be sent by the invoicing system to the processing system which can be configured to process them in the same way as the RURs received from the network components. The RURs generated by the invoicing system can be generated by the invoicing system on a basis of analysis of data received from the processing system. The data received from the invoicing system can comprise resource usage descriptions of a particular resource. The invoicing system can generate a RUR when a cumulative resource usage volume of the resource calculated using the resource usage descriptions is higher than a threshold value or lower than another threshold value. This can be the case when a user does not use the resource as specified in his contract. The generated RUR, when processed by the rating system and the invoicing system, results in an (penalty) charge amount in the invoice generated by the invoicing system for the user or in a reduction of an overall charge amount specified in the invoice.

The network components, the processing system, the database, the rating system, and the invoicing system, each can comprise a computer processor and a memory storing computer executable code which when executed by the processor causes it to execute steps of computer-implemented methods described herein.

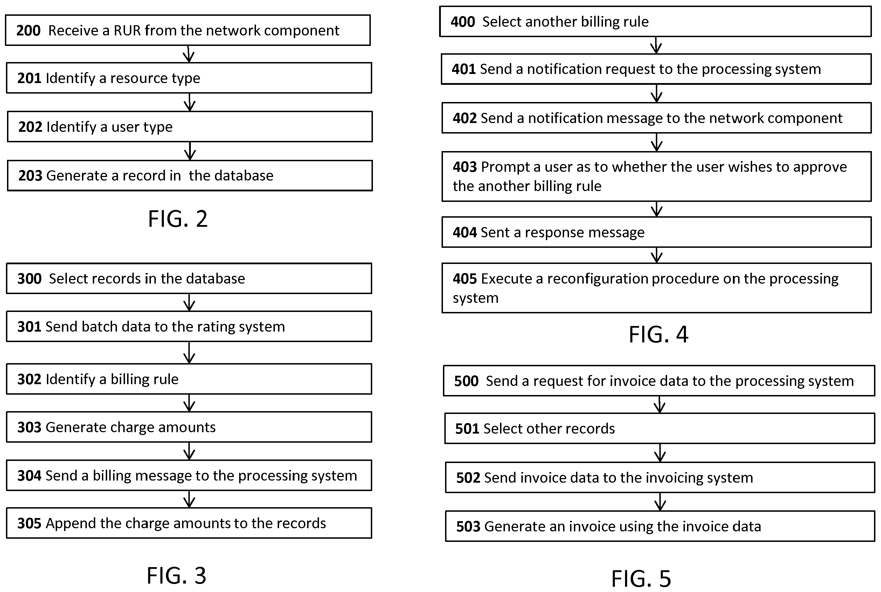

Fig. 2 illustrates a computer-implemented method for initial processing of the RURs received from network components and generation of records in the database in response to the receiving of the RURs. The method begins with a process block 200. In process block 200 processing system receives a RUR is received the from a network component. The received RUR is generated for a resource provided to a user. Process block 201 is executed after process block 200. In process block 201 the processing system identifies a resource type of the resource by using a resource usage description comprised in the received RUR. The resource type can be for instance water, gas, electricity, telephone call, internet connection, a bank transaction, etc. Process block 202 is executed after process block 201. In process block 202 the processing system identifies a user type of the user by using an identification information comprised in the received RUR. The user type can be for instance a user of a particular group of users, a private user, a corporate user, a user having a prepaid contract, a user having a postpaid contract, a user authorized to user a particular group of resources, etc. The user type can be a combination of these user types as well. The identification of the user type can be implemented by assigning of a device identifications comprised in identification information of RURs to user types. For instance when the processing system identifies a particular device identification comprised in identification information comprised in a received RUR, then it identifies a corresponding particular user type assigned to said particular device identification. In general, the processing system can store lists of device identifications each being assigned to a respective user type. Process block 203 is executed after process block 202. In process block 203 the processing system generates a record in the database. The record comprising the resource usage description comprised in the received RUR and as option the identification information comprised in the received RUR. The record is associated with the identified resource type and the identified user type. The record can be further associated with the device identification of the network component from which the RUR is received. Process blocks 200-203 can be repeated for each RUR received from the same or other network components.

Fig. 3 illustrates a computer-implemented method for rating of the resource usage descriptions comprised in the records stored in the database. The method begins with process block 300. In process block 300 the processing system selects records in the database according to a selection criterion. The selection criterion specifies that that a record to be selected is associated with a resource type assigned to that selection criterion and a user type assigned to that selection criterion. The selection criterion can further specify a predefined time interval in which a resource specified in a resource usage description comprised in a record to be selected is used. The selection criterion can further specify that a record to be selected comprises a resource usage description for which the charge amount is not yet generated. Execution of process block 300 can be triggered according to a schedule, specifying time events when records have to be selected according to the selection criterion. Alternatively or in addition execution of process block 300 can be triggered when a number of records complying with the selection criterion are bigger than a predefined number. The selection criterion can be one of selection criteria of a set of selection criteria. For each of at least some of them a respective schedule and/or a respective predefined number triggering execution of process block 300 can be specified. Each of the selection criteria can have a respective billing rule assigned to it. The billing rule can specify charge amount versus a cumulative volume of a consumed resource and as option different pricing of the resource depending on time interval in which the resource is consumed. For instance it can specify a price of electricity in a time interval 20:00 - 6:00 and a price of electricity in a time interval 6:00-22:00.

Process block 301 is executed after process block 300. In process block 301 the processing system sends batch data to the rating system. The batch data comprises resource usage descriptions, each comprised in the respective record selected in process block 300. Process block 302 is executed after process block 301. In process block 302 the rating system identifies a billing rule assigned to the selection criterion used in process block 300. This can be done in various ways. Data determining the assignment of the selection criteria to the respective selection criteria can be stored either in the rating system or in the processing system. When the data is stored in the processing system then the batch data specifies the billing rule to be used by the rating system. When the data is stored in the rating system than the batch data specifies the selection criterion which is used in process block 300. The latter option can provide better data protection because the rating system does not communicate with network components. As a result thereof its data exchange can be localized/limited only to communication with the processing system. Process block 303 is executed after process block 302. In process block 303 the rating system generates a charge amount for each of the resource usage descriptions comprised in the batch data using the billing rule identified in process block 302. Process block 304 is executed after process block 303. In process block 304 the rating system sends a billing data to the processing system. The billing data comprises the charge amounts generated in process block 303. Process block 305 is executed after process block 304. In process block 305 the processing system receives the billing data. Afterwards it appends each of the charge amounts comprised in the billing data to the respective record comprising the resource usage description for which the each of the charge amounts is generated in process block 303.

Although generation of charge amounts for various resource usage descriptions originating from different network components of different users are generated in one process block 303 using one billing rule it is possible to implement individual rating for each user. In this case not only resource usage descriptions have to be comprised in the batch data, but device identifications as well. Each resource usage description has to be associated with the device identification of the network component which has generated a RUR comprising the each resource usage description. In its own turn the billing rule can be formulated such that not only resource usage description is used for generation of a charge amount but a device identification as well. This approach can be illustrated on a basis of simple example. A billing rule can have two specifications for generation of charge amounts. One specification can be used for generating charge amounts using resource usage descriptions originating from one network component having a device identification. Another specification can be used for generating charge amounts using resource usage descriptions originating from another network component having another device identification.

As it is mentioned above, other components of the example environment 100 can generate RURs as well. The resource provider system can be configured to generate RURs related to basic fees for providing access to resources for users. In particular, the resource provider system is configured to perform the following step: sending a RUR to the processing system, wherein the RUR comprising an identification information and a resource usage description. This RUR can have the same data structure as the RUR received from the network component 200. The identification information of the RUR received from the resource provider system comprises the device identification of one of the network components. The resource usage description comprised in the another RUR comprises a basic fee for providing access to a resource and a description of the resource. The device identification comprised in the RUR generated by the resource provider system can enable processing the RUR using the same selection criteria as for RURs received from the network components. For instance, when the basic fee is for providing access to the same resource to the same user as in process block 200, then the device identification of the network component which has generated the RUR received in process block 200 is comprised in the identification information comprised in the RUR generated by the resource provider system.

The processing system is configured to perform the following steps in response to receiving the RUR from the resource provider system: identifying a resource type of the resource by using the resource usage description comprised in the received RUR (e.g. in the same way as in process block 201), identifying a user type of the user by using the identification information comprised in the received RUR (e.g. in the same way as in process block 202), and generating a record in the database. The generated record comprises the resource usage description comprised in the received RUR, the identification information comprised in the received RUR, and a charge amount being equal to the basic fee comprised in the resource usage description comprised in the received RUR. The generated record is associated in the database with the identified resource type and the identified user type. The process of the record generation is similar to the process of record generation in process block 203, however the generated record in this case comprises already the charge amount. In the other words it is the record which has the same data structure as records generated in process block 305.

Fig. 4 illustrates a computer-implemented method for changing a billing rule for a particular user. At least some of each of the billing rules can have a respective resource usage specification. The telecommunication system can be configured to prompt a user to approve an alternative billing rule when a resource usage description does not comply with a resource usage specification of a billing rule used for calculation of a charge amount for the resource usage specification. The purpose of this procedure can be illustrated on the following example illustrating usage of three billing rules. A resource usage specification of a first billing rule specifies a user internet traffic having download volume of less than 1 Gb per month. A resource usage specification of a second billing rule specifies a user internet traffic having download volume less than 5 Gb per month. A resource usage specification of a third billing rule specifies a user internet traffic having download volume less than 10 Gb per month. Any of these billing rules is applicable for generation of charges for any data volume downloaded by a user. However, they can be formulated such that they provide the best cost benefit when the actual download volume complies with the resource usage specification. For instance, the first billing rule can specify a fixed charge amount of 1 Euro when a volume of downloaded data is less than 1 Gb and 1 Eurocent for each extra 10 Mb of downloaded data. The second billing rule can specify a fixed charge amount of 3 Euro when a volume of downloaded data is less than 5 Gb and 1 Eurocent for each extra 10 Mb of downloaded data. The third billing rule can specify a fixed charge amount of 5 Euro when a volume of downloaded data is less than 10 Gb and 1 Eurocent for each extra 10 Mb of downloaded data.

The method begins with process block 400. In process block 400 the rating system selects another billing rule when a resource usage description comprised in the batch data sent in process block 301 does not comply with a resource usage specification of the billing rule identified in process block 302 and complies with a resource usage specification of the another billing rule. These two billing rules are assigned to different selection criteria, wherein the same resource type is assigned to both of the selection criteria and different user types are assigned to both of the selection criteria. Turning back to the aforementioned example, the resource usage description can specify a volume of downloaded data being equal to 4 Gb. The first billing rule is the billing rule identified in process block 302. The charge amount in this case is 4 Euro, i.e. 1 Euro for the first Gb and another 3 Euro for extra 3 Gb. The charge amount would be only 3 Euro when the second billing rule is applied. In this case, the rating system selects the second billing rule in process block 400.

Process block 401 is executed after process block 402. In process block 401 the rating system sends a notification request to the processing system. The notification request comprises a description of the another billing rule. The notification request can further comprise the resource usage description for which the another billing rule is selected in process block 401.

Process block 402 is executed after process block 401. In process block 402 the processing system receives the notification request. Afterwards it identifies a record comprising the resource usage description for which the another billing rule is selected. This can be done using the resource usage description comprised in the notification request. The processing system identifies a device identification associated with the identified record. The processing system sends to a network component having the identified device identification a notification message comprising the description of the another billing rule.

Process block 403 is executed after process block 402. In process block 403 the network component receives the notification message. Afterwards it prompts a user as to whether the user wishes to approve the another billing rule. This can be implemented by displaying a description of the another billing rule on a display of a user interface of the network component and receiving an input of the user via the user interface indicating either approval of the another billing rule or rejection of the another billing rule. The network component sends a response message to the processing system in process block 404 executed after process block 403, when the user has approved the another billing rule. The response message indicates that the user has approved the another billing rule.

The network component can be configured such that in case when in response to the displaying of the description no user input is received from the user within a predefined interval of time elapsed after starting of the displaying of the description the network component is sends the response message by default.

When the network component is not equipped with the user interface operable for displaying a description or as additional option the network component can be configured to communicate via a computer network with a user device equipped with a user interface being operable for displaying the description and receiving an input from the user. The user device can be for instance a smartphone or a tablet. In this case the network component forwards the description to the user device. In its own turn the user device forwards to the network component an input of the user, if any, indicating either approval or the another billing rule or rejection of the another billing rule.

Process block 405 is executed after process block 404 in case when the response message is sent. In process block 405 the processing system receives the response message. Afterwards it executes a reconfiguration procedure. The reconfiguration procedure causes the processing system to identify another user type in process block 202 in response to receiving in process block 200 of a RUR from the network component having the device identification identified in process block 402, when a resource type identified in process block 201 using a resource usage description comprised in the received RUR is the resource type assigned to the selection criterion assigned to the another billing rule selected in process block 400, wherein the another user type is assigned to the selection criterion assigned to the another billing rule selected in process block 400. The reconfiguration procedure can be implemented by cancelling assignment of a user type assigned to the device identification identified in process block 402 and assigning the another user type assigned to the selection criterion assigned to the another billing rule selected in process block 400 to the device identification identified in process block 402.

Fig. 5 illustrates a computer-implemented method for generating invoices. The method begins with process block 500. The invoicing system sends a request for invoice data request to the processing system. The billing request comprises a record selection criterion assigned to a user. The billing request can be send at an end of a billing cycle assigned to the user. Process block 501 is executed after process block 500. In process block 501 the processing system receives the request. Afterwards it selects in the database records complying with the record selection criterion specified in the request. The selected records comprise charge amounts. The selection of records can be restricted to the billing cycle, i.e. only records comprising resource usage descriptions indicating that resources used according to that resource usage descriptions are used during the billing cycle. The record selection criterion can comprise a list of device identification. The record selection criterion can specify that an identification information of a record to be selected comprises any one of the device identifications of the list. The list can be comprised in the request. Process block 502 is executed after process block 501. In process block 502 the processing system sends invoice data comprising charge amounts comprised in the records selected in process block 501. The invoice data can further comprise resource usage descriptions comprised in the records selected in process block 501. Process block 503 is executed after process block 502. In process block 503 the invoicing system receives the invoice data and generates an invoice using the received invoice data. Afterwards, the invoicing system can send it to the user. The list of the device identifications used in process blocks 500 and 501 can be assigned in the invoicing system to the user to whom the invoice is sent.

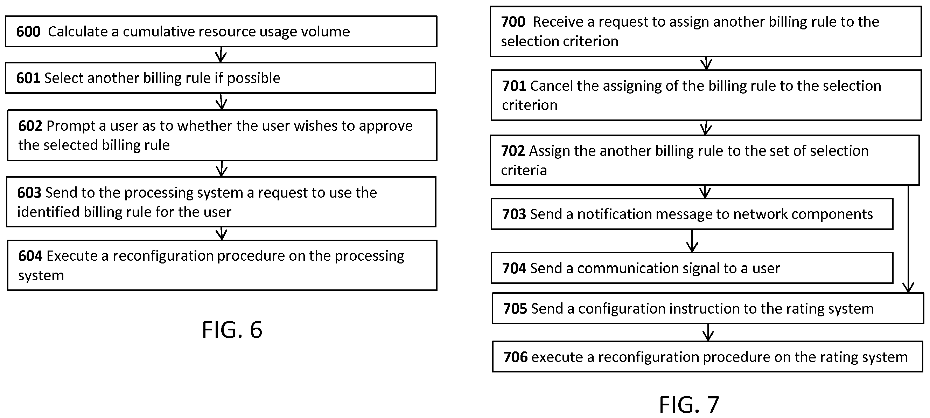

Fig. 6 illustrates a computer-implemented method for changing a billing rule for a user initiated by the invoicing system. At least some of each of the billing rules can have a respective assigned cumulative resource usage specification. The telecommunication system can be configured to prompt a user to select an alternative billing rule when a cumulative resource usage volume calculated using resource usage descriptions comprised in invoice data does not comply with a cumulative resource usage specification, wherein the cumulative resource usage specification is assigned to a billing rule used for calculating charge amounts using the same resource usage descriptions. The cumulative resource usage volume can be a sum of resource usage quantities specified in the resource usage descriptions. Alternatively, the user can trigger execution of this method after a receipt of the invoice generated in process block 503. He may send a request for another billing rule to be assigned for generation of charge amounts for a particular resource (or resource type) consumed/used by the user. This method can enable to apply a new billing rule in a next billing cycle on a basis of a cumulative resource usage volume calculated for a resource (or resource type) consumed/used in a previous billing cycle.. The purpose of this procedure can be illustrated on the following example illustrating usage of a first and a second billing rule. A cumulative resource usage specification of a first billing rule specifies a total duration of phone calls made by a user being more than 60 minutes per billing cycle. A cumulative resource usage specification of a second billing rule specifies a total duration of phone calls made by a user being more than 90 minutes per billing cycle. The first billing rule specifies a telephone call price of 2 Eurocent per minute. The second billing rule specifies a telephone call price of 1 Eurocent per minute.

The method begins with process block 600. In process block 600 the invoicing system calculates a cumulative resource usage volume using the resource usage descriptions in the invoice data. All resource usage descriptions are comprised in records complying with a selection criterion assigned to a billing rule, which is used for calculation of charge amounts for each of the resource usage records used for the calculation cumulative resource usage volume. Process block 601 is executed after process block 600. In process block 601 the invoicing system selects another billing rule when the cumulative resource usage volume complies with a cumulative resource usage specification of the another billing rule. The another billing rule is assigned to another selection criterion. The same resource user type is assigned to the another selection criterion and the selection criterion. Different user types are assigned to the another selection criterion and the selection criterion. Another user type is assigned to the another selection criterion.

Turning back to the aforementioned example. The invoice data can comprise two resource usage descriptions. Each of the resource usage descriptions specifies a phone call having a duration of 40 minutes. A cumulative resource usage volume is 80 minutes. The charge amounts comprised in the invoice are generated according to the first billing rule. The cumulative resource usage volume complies with the cumulative resource sage specification assigned to the second billing rule. Thus the second billing rule is selected in process block 601. This billing rule can be used for the next billing cycle.

Execution of process blocks 601 and 600 can be triggered automatically by the invoicing system. In response to receiving of an invoice data the invoicing system can calculate a cumulative resource usage value for one or more billing rules which where used for calculation the charge amounts comprised in the invoice data. Alternatively a user can send a request to change a billing rule according to which charge amounts (related to particular resource or resource type) in his invoice are calculated.

Process block 602 is executed after process block 601 when the another billing rule is selected in process block 601. In process block 602 the invoicing system the user as to whether the user wishes to approve the another bulling rule. This can be done using a user device of the user in a similar or the same way as described in process block 403. Process block 603 is executed after process block 602 when the user has approved the another billing rule. In process block 603 the invoicing system sends a request to use the another billing rule for the user. Process block 604 is executed after process block 603. In process block 604 the processing system receives the request. Afterwards it executes a reconfiguration procedure. The reconfiguration procedure causes the processing system to identify the another user type in process block 202 in response to receiving in process block 200 of a RUR from a network component having a device identification comprised in a list of device identifications assigned to the user, when a resource type identified in process block 201 using a resource usage description comprised in the received RUR is the resource type assigned to the another selection criterion assigned to the another billing rule selected in process block 601, wherein the another user type is assigned to the another selection criterion assigned to the another billing rule selected in process block 601. The reconfiguration procedure can be implemented by cancelling assignment of a user type assigned to a device identification comprised in the list and assigning the another user type assigned to the another selection criterion assigned to the another billing rule selected in process block 601 to the device identification comprised in the list.

Fig. 7 depicts a flowchart of a computer-implemented method for assigning another billing rule to a selection criterion. The method begins with process block 700 in process block 700 the processing system receives a request to assign another billing rule to the selection criterion. The request can be received from a resource provider. Process block 701 is executed after process block 700. In process block 701 the processing system cancels the assignment of a billing rule to the selection criterion specified in the request. Process block 702 is executed after process block 701. In process block 702 the processing system assigns the another billing rule specified in the request to the selection criterion specified in the request. Process block 703 is executed after process block 702. In process block 703 the processing system selects records complying with the selection criterion specified in the request. Afterwards it sends a notification message to network components of the telecommunication system, each having device identification associated with the respective selected record. The notification message comprises a description of the another billing rule specified in the request. Process block 704 is executed after process block 703. In process block 704 the network component receives the notification message. Afterwards it sends a communication signal to a user. The communication signal comprises the description of the another billing rule. The communication signal can be sent to the user via a user interface of the network component and/or via a user interface of a user device of the user as described above. Process block 705 is executed after process block 702 in process block 705 the processing system sends a configuration instruction to the rating system to use the another billing rule for generation of charge amounts comprised in batch data comprising resource usage descriptions comprised in records selected according to the selection criterion. Process block 706 is executed after process block 705. In process block 706 the rating system receives the configuration instruction from the processing system. Afterwards is executes a reconfiguration procedure causing the rating system to generate charge amounts using the another billing rule in further execution of process block 303 when another batch data received from processing system comprises resource usage descriptions comprised in records selected in process block 300 according to the selection criterion specified in the request received in process block 700.

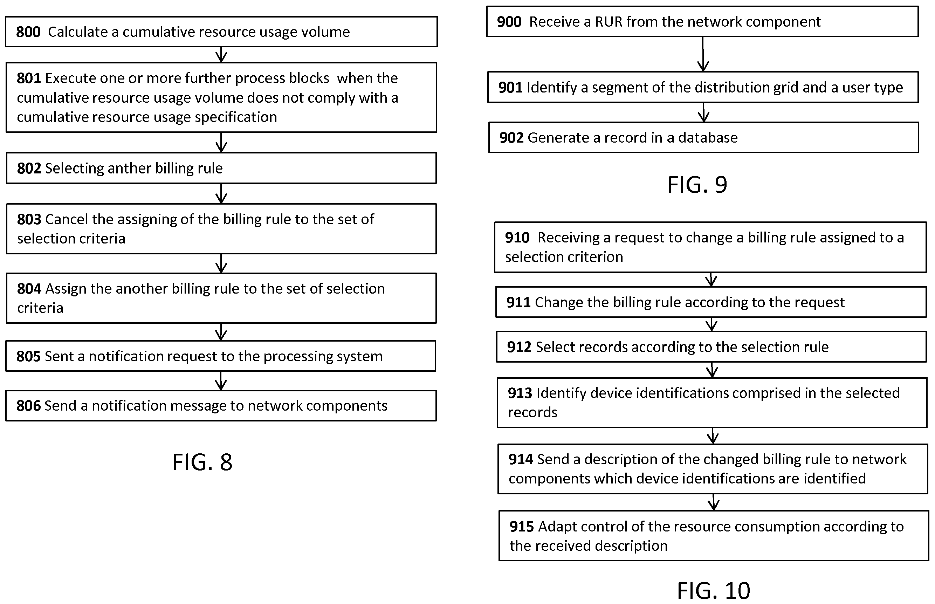

Fig. 8 depicts a flowchart of a computer-implemented method for assigning of another billing rule to a selection criterion on a basis of a cumulative resource usage volume calculated using resource usage descriptions comprised in records selected according to a selection criterion. This functionality requires assignment of a respective cumulative resource usage specification to each of at least some of the billing rules. The method begins with a process block 800 being comprised in process block 302. In process block 800 the rating system generates a cumulative resource usage volume using the resource usage descriptions comprised in the batch data received in process block 302. Process block 801 causes execution of process block 802 before execution of process block 303 when the cumulative resource usage volume does not comply with the cumulative resource usage specification assigned to the billing rule identified in process block 302. Process block 801 causes execution of process block 805 when the cumulative resource usage volume does not comply with the cumulative resource usage specification assigned to the billing rule identified in process block 302.

In process block 802 the rating system selects anther billing rule, wherein the cumulative resource usage volume complies with a cumulative resource usage specification of the another billing rule. Process block 803 is executed after process block 802. In process block 803 the rating system cancels the assigning of the billing rule identified in process block 302. Process block 804 is executed after process block 803. In process block 804 the rating system assigns the billing rule selected in process block 802 to the selection criterion. As a result thereof the charge amounts in process block 303 are generated using the billing rule selected in process block 802.

In process block 805 the rating system sends to the processing system a notification request comprising a description of the another billing rule selected in process block 802. Process block 806 is executed after process block 805. In process block 806 the processing system receives the notification request. Afterwards the processing system selects records complying with the selection criterion used in process block 300 and sends a notification message to network components of the telecommunication system, each having device identification associated with the respective selected record. The notification message comprises a description of the another billing rule selected in process block 802. In response to receiving of a notification message the network component sends a communication signal to a user. The communication signal comprises the description of the another billing rule. The sending of the communication signal can be performed in the same way as in process block 704.

Fig. 9 illustrates a computer-implemented method for initial processing of the RURs received from network components 101, 102 and generation of records in the database 130 in response to the receiving of the RURs. The network components are configured to control consumption of the resource distributed via a distribution grid 197 consisting of segments 199, 198 and to generate RURs. The RUR generated by a network component can comprise a resource consumption description of the resource delivered via the distribution grid an identification information comprising a device identification of the network component and identification data for identifying a node and/or a segment of the gird to which the network component is connected. The resource can be electricity. At least some of the network components can be smart home appliances. The distribution grid can be an electrical grid. The method begins with process block 900. In process block 900 the processing system receives a RUR from one of the network components for the resource consumed by a user. Process block 900 can be implemented in the same way as process block 200. Process block 901 is executed after process block 900. In process block 901 the processing system identifies a segment of the distribution grid and a user type by using an identification information comprised in the received RUR. Process block 901 can be implemented in the same way as process block 201 and/or 202. The user type can be the same in the method depicted on Fig. 2 and in the method depicted on Fig. 9. The segment of the distribution grid can be processed in the same way as the resource type in methods depicted on Figs. 2-8. Process block 902 is executed after process block 901. In process block 902 the processing system generates a record in the database. The record comprises a resource consumption/usage description comprised in the received RUR and as option the identification information comprised in the received RUR. The record is associated in the database with the identified segment and the identified user type. Process block 902 can be executed in the same way as process block 902.

The records stored in the database according to method depicted on Fig. 9 can be used in any method depicted in Figs. 3-8, wherein the segments of the gird are used as resource types.

Fig. 10 illustrates a computer-implemented method for controlling the grid/network providing resource to users using the environment described in the method depicted on Fig. 9. The method depicted on Fig. 10 begins with process block 910. In process block 910 the processing system receives a request to change a billing rule assigned to a selection criterion. The request can be received from a resource provider of the resource. The request is generated by the resource provider on a basis of monitoring availability of the resource by resource sources (or resource generation facilities) 170, 171 connected to the grid 197. When the resource is electricity, the provider can monitor electrical power deliverable by different electrical power plants such as solar cell power plants, wind mill arrays, nuclear power plants, etc. Process block 911 is executed after process block 910. In process block 911 the processing system changes the billing rule according to the request. Process block 912 is executed after process block 911. In process block 912 the processing system selects records in database according to the selection criterion. Process block 913 is executed after process block 912. In process block 913 the processing system identifies device identifications associated with the selected records or comprised in the selected records. Process block 914 is executed after process block 913. In process block 914 the processing system sends a description of the changed billing rule to network components which device identifications are identified. Process block 915 is executed after process block 914. In process block 915 one of the network components receives the description of the changed billing rule. Afterwards it adapts control of the resource consumption according to the received description. The network component 101 can be configured to manage consumption of the resource by causing a resource accumulation device 193 being connected to the same node of the distribution grid as the network component when a price of the resource according to the billing rule (or the received description of the billing rule) is below a predefined price and by causing the resource accumulation device to provide the resource as alternative to the resource provided via the gird when the price of the resource according to the billing rule (or the received description of the billing rule) is higher than another predefined price.

The methods disclosed herein are flexible. It is possible to perform various complex operations related to generation of invoices. For instance, it might be necessary to change a billing rule or user another billing rule "post-factum," i.e. after generation of invoices comprising change amounts which are generated using the an old (version) of the billing rule. Such a request can be received for instance from a resource provider or a resource provider system. When required, the processing system can generate an new billing rule by changing the old one according to the request. Afterwards process blocks 701-706 are executed. The next group of process blocks to be executed are process blocks 300-305. The selection criterion used in process block 300 for selection of the records to specifies not only parameters like a user type and a resource type which were used for generation of charge amounts using the old version of the billing rule or the old billing rule, but a time interval for selection of the records. This time interval can be provided by the resource provider which has requested a change. The time interval can be used for selection of records comprising resource usage descriptions of resources used/consumed within the time interval. Execution of process block 305 results in generation of records which comprise two charge amounts. However, the time interval can be selected such that charge amounts are generated for records comprising charge amounts which are not yet used for the generation of invoices in process block 503. For these records the charge amounts comprised therein can be substituted by the respective charge amounts generated according to the new billing rule. In this case the charge amount generated in process block 303 is not appended to the record, but it is used to substitute the charge amount appended to the record in previous execution of process block 305.In order to differentiate between these two cases, the records which contents are already used for invoice generation can be associated with a data marker. Thus the substitution of charge amounts can be limited to only records to which the data marker is not assigned. When a record does not comprise a charge amount, then execution of process block 305 results in generation of the record comprising charge amount generated according to the new billing rule.

The records comprising two charge amounts can be processed using a group of process blocks 500-503. Moreover these records can be processes in combination with the records comprising only one charge amount. The selection criterion procedure in process block 501 is modified in order to enable selection of the records comprising two charge amounts. The modified record selection procedure can enable selection of records comprising double charge amounts without restriction to the billing cycle. For instance the record selection procedure can have a special option for such records formulated as: a record to be selected has to comprise charge amounts and its identification information has to comprise any one of the device identifications of the list.. The charge amounts generated for the same resource usage description and comprised in the same record can be associated with each other in the invoice data generated in process block 502. When the resource usage descriptions are comprised in the invoice data, then the charge amounts generated for the same resource usage description and comprised in the same record can be associated with the resource usage description in the invoice data. The association of the charge amounts can have a format indicating sequence of their generation.

The process block 503 can comprise an additional process for processing double charge amounts comprised in single records. Instead straightforward specifying of both charge amounts comprised in one record in an invoice, the additional process is configured to calculate their difference and specify it in the invoice. For instance when the charge amount generated last is bigger than the previously generated charge amount then a user has to pay the difference, i.e. a positive charge amount being the difference of the charge amounts is specified in the invoice. On the other hand, when the charge amount generated last is less than the previously generated charge amount then the user has to be receive back the difference, i.e. a negative charge amount being the difference of the charge amounts is specified in the invoice. The process can be configured to differentiate between single charge amounts (i.e. charge amounts originating from the records comprising only one charge amount, each) and double charge amounts (i.e. charge amounts originating from the records comprising two charge amounts, each) using association of the charge amounts in the invoice data. The process can specify a charge amount in the invoice when that charge amount does not have an associated charge amount in the invoice data, and specify a differential charge amount in the invoice for the associated charge amounts, wherein the differential charge amount is equal to one of the associated charge amounts minus another one of the associated charge amounts, wherein the one of the associated charge amounts is generated after the another one of the associated charge amounts.

The preceding figures and accompanying description illustrate the example processes and computer implementable techniques. But example environment (or their software or other components) contemplate using, implementing, or executing any suitable technique for performing these and other tasks. It will be understood that these processes are for illustration purposes only and that the described or similar techniques may be performed at any appropriate time, including concurrently, individually, in parallel, and/or in combination. In addition, many of the operations in these processes may take place simultaneously, concurrently, in parallel, and/or in different orders than as shown. Moreover, the example environment may use processes with additional, fewer and/or different operations, as long as the methods remain appropriate.

In other words, although this disclosure has been described in terms of certain implementations and generally associated methods, alterations and permutations of these implementations and methods will be apparent to those skilled in the art. Accordingly, the above description of example implementations does not define or constrain this disclosure. Implementations of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The term "control system" refers to data processing hardware and encompasses all kinds of apparatus, devices, and machines for processing data, including by way of example, a programmable processor, a computer, or multiple processors or computers. The apparatus can also be or further include special purpose logic circuitry, e.g., a central processing unit (CPU), a FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatuses with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components as appropriate.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., a CPU, a FPGA, or an ASIC.

Computers suitable for the execution of a computer program can be based on general or special purpose microprocessors, both, or any other kind of CPU. Generally, a CPU will receive instructions and data from a read only memory (ROM) or a random access memory (RAM) or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a global positioning system (GPS) receiver, or a portable storage device, e.g., a universal serial bus (USB) flash drive, to name just a few.

Computer readable media (transitory or non-transitory, as appropriate) suitable for storing computer program instructions and data include all forms of non-volatile memory, media and memory devices, including by way of example semiconductor memory devices, e.g., erasable programmable read-only memory (EPROM), electrically-erasable programmable read-only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

The "electronic user interface" may be a "graphical user interface," or GUI, may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back end component, e.g., as a data server, or that includes a middleware component, e.g., an application server, or that includes a front-end component, e.g., a client computer having a graphical user interface or a web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, both hardware and/or software, may interface with each other and/or the interface using an application programming interface (API) and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in extensible markup language (XML) format or other suitable format. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any implementation or on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some causes be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Particular implementations of the subject matter have been described. Other implementations, alterations, and permutations of the described implementations are within the scope of the following claims as will be apparent to those skilled in the art. For example, the actions recited in the claims can be performed in a different order and still achieve desirable results.

## Claims

1. A telecommunication system (100) comprising a rating system (140), a processing system (120), a database (130), and a network component (101, 102) configured to generate resource usage records, RURs, each comprising a resource usage description of usage of one of resources and an identification information comprising a device identification of the network component, the database being configured to store records, the processing system being configured to store device identifications each being assigned to a respective user type, the processing system being configured to perform the following steps:
• receiving a RUR from the network component for a resource provided to a user (200),
• identifying a resource type of the resource by using a resource usage description comprised in the received RUR (201),
• identifying a user type of the user by using an identification information comprised in the received RUR (202), wherein the identified user type is assigned to a device identification comprised in the identification information comprised in the received RUR,
• generating a record in the database, the record comprising the resource usage description comprised in the received RUR, the identification information comprised in the received RUR, the record being associated with the identified resource type and the identified user type (203),
• selecting records in the database according to a selection criterion specifying that a record to be selected is associated with a resource type assigned to that selection criterion and a user type assigned to that selection criterion (300), and
• sending batch data to the rating system, the batch data comprising resource usage descriptions, each comprised in the respective selected record (301),
the rating system being configured to perform the following steps in response to receiving of the batch data from the processing system:
• generating a charge amount for each of the resource usage descriptions comprised in the batch data (303), and
• sending a billing data to the processing system, the billing data comprising the charge amounts (304).

2. The telecommunication system of claim 1, wherein the rating system is configured to generate charge amounts for resource usage description comprised in batch data according to billing rules, wherein each of the billing rules is assigned to a respective selection criterion of a set of selection criteria comprising the selection criterion, wherein the rating system is configured to perform the following step in response to receiving of the batch data from the processing system:
• identifying a billing rule assigned to the selection criterion (303),
wherein the generating of the charge amount for each of the resource usage descriptions comprised in the batch data is executed according to the identified billing rule.

3. The telecommunication system of claim 1, wherein the rating system is configured to generate charge amounts for resource usage descriptions comprised in batch data according to billing rules each having a resource usage specification, wherein each of the billing rules is assigned to a respective selection criterion of a set of selection criteria comprising the selection criterion, wherein the resource type assigned to the selection criterion is the identified resource type and the user type assigned to the selection criterion is the identified user type, wherein the rating system is configured to perform the following in response to receiving the of batch data from the processing system:
• identifying a billing rule assigned to said selection criterion (303),
wherein the generating of the charge amount for each of the resource usage descriptions comprised in the batch data is executed according to the identified billing rule, wherein the rating system is configured to perform the following steps in response to receiving the batch data from the processing system:
• selecting another billing rule when the resource usage description comprised in the received RUR does not comply with a resource usage specification of the identified billing rule and complies with a resource usage specification of the another billing rules, wherein the another billing rule is assigned to another selection criterion, wherein another user type and the identified resource type are assigned to the another selection criterion (400),
• sending to the processing system a notification request comprising a description of the another billing rule (401),
the processing system being configured to perform the following in response to receiving the notification request:
• sending to the network component a notification message comprising the description of the another billing rule (402),
the network component is configured to perform the following steps in response to receiving of the notification message:
• prompting the user as to whether the user wishes to approve the another billing rule (403),
• sending to the processing system a response message indicating that the user has approved the another billing rule, when the user has approved the another billing rule (404),
wherein the processing component is configured to perform the following in response to receiving of the response message:
• executing a reconfiguration procedure causing the processing system to identify the another user type in further execution of the identifying of a user type of a user by using an identification information comprised in another received RUR, when the another received RUR is received from the network component for the resource provided to the user (405).

4. The telecommunication system of claim 1, the processing system being configured to perform the following step in response to receiving of the billing data from the rating system:
• appending each of the charge amounts to the respective record comprising the resource usage description for which the each of the charge amounts is generated (305),
wherein the telecommunication system further comprises an invoicing system being configured to perform the following at an end of a billing cycle assigned to the user:
• sending to the processing system an invoice data request comprising a record selection criterion assigned to the user and the billing cycle (500),
the processing system being configured to perform the following steps in response to receiving of the invoice data request:
• selecting other records in the database each comprising an identification information complying with the record selection criterion, a charge amount, and a resource usage description indicating that a resource used according to that resource usage description is used during the billing cycle (501),
• sending invoice data to the invoicing system, the invoice data comprising charge amounts, each comprised in the respective another record (502),
the invoicing system being configured to perform the following step in response to receiving of the invoice data:
• generating an invoice using the invoice data (503).

5. The telecommunication system of claim 4, wherein the generating of the charge amount for each of the resource usage descriptions comprised in the batch data is executed according to a billing rule assigned to the selection criterion, wherein the processing system being configured to perform the following in response to receiving the invoice data request:
• associating each of the other records with a data marker indicating that the charge amount comprised in the each of the other records is used for invoicing,
wherein the processing system is configured to perform the following steps in response to receiving of a request to assign another billing rule to the selection criterion:
• cancelling the assigning of the billing rule to the selection criterion,
• assigning the another billing rule to the selection criterion,
• repeating the selecting of records in the database according to the selection criterion, and
• sending another batch data to the rating system, the another batch data comprising resource usage descriptions, each comprised in the record selected in the repeating of the selecting of the records in the database according to the selection criterion,
wherein the rating system is configured to perform the following steps in response to receiving of the another batch data from the processing system:
• generating a charge amount for each of the resource usage descriptions comprised in the another batch data using the another billing rule, and
• sending another billing data to the processing system, the billing data comprising the charge amounts generated in the generating of the charge amount for each of the resource usage descriptions comprised in the another batch data,
wherein the processing system is configured to perform the following step in response to receiving of the another billing data from the rating system:
• appending each of the charge amounts comprised in the another billing data to the respective record comprising the resource usage description for which the each of the charge amounts comprised in the another billing data is generated when the respective record comprising the resource usage description for which the each of the charge amounts comprised in the another billing data is generated does not comprise the charge amount or the respective record comprising the resource usage description for which the each of the charge amounts comprised in the another billing data is generated is associated with the data marker, otherwise substituting a charge amount comprised in the respective record comprising the resource usage description for which the each of the charge amounts comprised in the another billing data is generated by the each of the charge amounts comprised in the another billing data.

6. The telecommunication system of claim 5, wherein the invoicing system being configured to perform the following step at an end of another billing cycle assigned to the user:
• sending to the processing system another invoice data request comprising the record selection criterion and the another billing cycle,
the processing system being configured to perform the following steps in response to receiving of the invoice data request:
• selecting other records in the database each comprising either an identification information complying with the record selection criterion, only one charge amount, and a resource usage description indicating that a resource used according to that resource usage description is used during the another billing cycle or an identification information complying with the record selection criterion and charge amounts, and
• sending another invoice data to the invoicing system, the invoice data comprising charge amounts each comprised in the respective another record selected in the selecting of the other records in the database each comprising either an identification information complying with the record selection criterion, only one charge amount, and the resource usage description indicating that the resource used according to that resource usage description is used during the another billing cycle or the identification information complying with the record selection criterion and the charge amounts, wherein the charge amounts comprised in the same record are associated with each other in the another invoice data,
the invoicing system being configured to perform the following step in response to receiving of the another invoice data:
• generating another invoice using the another invoice data, wherein the generating of the another invoice using the another invoice data comprises:
• specifying a charge amount in the another invoice when that charge amount does not have an associated charge amount in the another invoice data, and
• specifying a differential charge amount in the another invoice for the associated charge amounts, wherein the differential charge amount is equal to one of the associated charge amounts minus another one of the associated charge amounts,
wherein the one of the associated charge amounts is generated after the another one of the associated charge amounts.

7. The telecommunication system of claim 4, wherein the identification information of the received RUR comprises a device identification of the network component, wherein the telecommunication system comprises a resource provider system configured to generate RURs related to basic fees for providing access to the resource for the user, wherein the resource provider system is configured to perform the following step:
• sending another RUR to the processing system, the another RUR comprising an identification information and a resource usage description, the identification information comprised in the another RUR comprising the device identification of the network component, the resource usage description comprised in the another RUR comprising a basic fee for providing access to the resource and a description of the resource
wherein the processing system is configured to perform the following steps:
• receiving the another RUR from the resource provider system,
• identifying a resource type of the resource by using the resource usage description comprised in the another RUR,
• identifying a user type of the user by using the identification information comprised in the another RUR,
• generating another record in the database, the another generated record comprising the resource usage description comprised in the another RUR, the identification information comprised in the another RUR, a charge amount being equal to the basic fee comprised in the resource usage description comprised in the another RUR, the another record being associated with the resource type identified in the identifying of resource type of the resource by using the resource usage description comprised in the another RUR and the user type identified in the identifying of the user type of the user by using the identification information comprised in the another RUR.

8. The telecommunication system of claim 4, wherein the rating system is configured to generate charge amounts for resource usage descriptions comprised in batch data according to billing rules each having a cumulative resource usage specification, wherein each of the billing rules is assigned to a respective selection criterion of a set of selection criteria comprising the selection criterion, wherein the rating system is configured to perform identifying a billing rule assigned to said selection criterion in response to receiving of the batch data from the processing system, wherein the generating of the charge amount for each of the resource usage descriptions comprised in the batch data is executed according to the identified billing rule, wherein the invoice data comprises resource usage descriptions, each comprised in the respective another record, wherein the invoicing system is configured to perform the following steps:
• calculating a cumulative resource usage volume of the resource using the resource usage descriptions in the invoice data each having the respective charge amount generated using the identified billing rule (600),
• selecting another billing rule when the cumulative resource usage volume complies with a cumulative resource usage specification of the another rule, wherein the another billing rule is assigned to another selection criterion, wherein another user type and the identified resource type are assigned to the another selection criterion (601),
• prompting the user as to whether the user wishes to approve the another bulling rule (602),
• sending to the processing system a request to use the another billing rule for the user when the user has approved the another billing rule (603),
wherein the processing system is configured to perform the following steps in response to receiving of the request to use the another billing rule for the user:
• executing a reconfiguration procedure causing the processing system to identify the another user type in further execution of the identifying of a user type of a user by using an identification information comprised in another received RUR, when the another received RUR is received for the resource provided to the user from any of the network components having a device identification comprised in the list of device identifications (604).

9. The telecommunication system of claim 1, wherein the identification information of the received RUR comprises a device identification of the network component, wherein the record generated in the step of the generating of the record in the database is associated with the device identification, wherein the generating of the charge amount for each of the resource usage descriptions comprised in the batch data is executed according to a billing rule assigned to the selection criterion, wherein the processing system is configured to perform the following in response to receiving of a request to assign another billing rule to the selection criterion (700):
• cancelling the assigning of the billing rule to the selection criterion (701),
• assigning the another billing rule to the selection criterion (702),
• sending a notification message to network components of the telecommunication system, each having device identification associated with the respective selected record, the notification message comprises a description of the another billing rule (703).

10. The telecommunication system of claim 9, wherein the processing system is configured to perform the following in response to receiving of the request to assign the another billing rule to said selection criterion:
• sending a configuration instruction to the rating system to use the another billing rule for generation of charge amounts comprised in batch data comprising resource usage descriptions comprised in records selected according to the selection criterion (705),
wherein the rating system is configured to perform the following in response to receiving of the configuration instruction:
• executing a reconfiguration procedure causing the rating system to generate charge amounts using the another billing rule in further execution of the generating of a charge amount for each of resource usage descriptions comprised in another received batch data when the another received data comprises resource usage descriptions comprised in records selected according to the selection criterion (706).

11. The telecommunication system of claim 1, wherein the rating system is configured to generate charge amounts for resource usage descriptions comprised in batch data according to billing rules each having a cumulative resource usage specification, wherein each of the billing rules is assigned to a respective selection criterion of a set of selection criteria comprising the selection criterion, wherein the rating system is configured to perform the following steps in response to receiving of the batch data from the processing system:
• calculating a cumulative resource usage volume using the batch data (800),
• preforming the following when the cumulative resource usage volume does not comply with a cumulative resource usage specification of a billing rule assigned to the selection criterion (801):
• selecting anther billing rule, wherein the cumulative resource usage volume complies with a cumulative resource usage specification of the another billing rule (802),
• cancelling the assigning of the billing rule to the selection criterion (803),
• assigning the another billing rule to the selection criterion (804),
wherein the charge amounts in the generating of the charge amount for the each of the resource usage descriptions comprised in the batch data are generated using the another billing rule when the cumulative resource usage volume complies with the cumulative resource usage specification of the another billing rule, wherein the charge amounts in the generating of the charge amount for the each of the resource usage descriptions comprised in the batch data are generated using the billing rule when the cumulative resource usage volume complies with the cumulative resource usage specification of the billing rule.

12. A telecommunication system of claim 4, wherein the record generated in the step of the generating of the record in the database is assigned to the device identification, wherein the record selection criterion comprises a list of device identifications, wherein the record selection criterion specifies that an identification information of a record to be selected comprises any one of the device identifications of the list.

13. A telecommunication system of claim 11, wherein the record generated in the step of the generating of the record in the database is associated with the device identification, wherein the rating system is configured to perform the following in response to receiving of the batch data from the processing system:
• sending to the processing system a notification request comprising a description of the another billing rule when the cumulative resource usage volume does not comply with the cumulative resource usage specification of the billing rule assigned to the selection criterion;
wherein the processing system is configured to perform the following in response to receiving of the notification request:
• sending a notification message to network components of the telecommunication system, each having device identification assigned to the respective selected record, the notification message comprising the description of the another billing rule.

14. A computer-implemented method for processing of resource usage records, RURs, in a telecommunication system (100) comprising a rating system (140), a database (130), a processing system (120), and a network component (101, 102) configured to generate the RURs, each of the RURs comprising a resource usage description of usage of one of resources and an identification information comprising a device identification of the network component, the processing system being configured to store device identifications each being assigned to a respective user type, the method comprising the following steps performed by the processing system:
• receiving a RUR from the network component for a resource provided to a user (200),
• identifying a resource type of the resource by using a resource usage description comprised in the received RUR (201),
• identifying a user type of the user by using an identification information comprised in the received RUR (202), wherein the identified user type is assigned to a device identification comprised in the identification information comprised in the received RUR,
• generating a record in the database, the record comprising the resource usage description comprised in the received RUR, the identification information comprised in the received RUR, the record being associated with the identified resource type and the identified user type (203),
• selecting records in the database, each complying with a selection criterion specifying that a record to be selected is associated with a resource type assigned to the selection criterion and a user type assigned to the selection criterion (300), and
• sending batch data to the rating system, the batch data comprising resource usage descriptions, each comprised in the respective selected record (301),
the method further comprising the following steps being performed by the rating system in response to receiving of the batch data from the processing system:
• generating a charge amount for each of the resource usage descriptions comprised in the batch data (303), and
• sending a billing data to the processing system, the billing data comprising the charge amounts (304).

15. A computer readable medium having stored thereon a computer executable code for execution by a computer processor controlling a computer system, wherein execution of the instructions of the executable code causes the computer processor to execute the computer-implemented method of claim 14.

## Patentansprüche

1. Ein Telekommunikationssystem (100), umfassend ein Ratingsystem (140), ein Verarbeitungssystem (120), eine Datenbank (130) und eine Netzwerkkomponente (101, 102), die konfiguriert ist, um Ressourcenverbrauchsdatensätze, RURs, zu erzeugen, die jeweils eine Ressourcenverbrauchsbeschreibung der Nutzung einer der Ressourcen und eine Identifikationsinformation umfassen, die eine Geräteidentifikation der Netzwerkkomponente umfasst, wobei die Datenbank konfiguriert ist, um Datensätze zu speichern, wobei das Verarbeitungssystem konfiguriert ist, um Geräteidentifikationen zu speichern, die jeweils einem entsprechenden Nutzertyp zugeordnet sind, wobei das Verarbeitungssystem konfiguriert ist, um die folgenden Schritte auszuführen:
• Empfangen eines RUR von der Netzwerkkomponente für eine Ressource, die einem Nutzer bereitgestellt wird (200),
• Identifizieren eines Ressourcentyps der Ressource unter Verwendung einer Ressourcenverbrauchsbeschreibung, die in dem empfangenen RUR umfasst ist (201),
• Identifizieren eines Nutzertyps des Nutzers unter Verwendung einer Identifikationsinformation, die in dem empfangenen RUR umfasst ist (202), wobei der identifizierte Nutzertyp einer Geräteidentifikation zugeordnet ist, die in der Identifikationsinformation umfasst ist, die in dem empfangenen RUR umfasst ist,
• Erzeugen eines Datensatzes in der Datenbank, wobei der Datensatz die in dem empfangenen RUR umfasste Ressourcenverbrauchsbeschreibung umfasst, wobei der empfangene RUR die Identifikationsinformation umfasst, wobei der Datensatz dem identifizierten Ressourcentyp und dem identifizierten Nutzertyp zugeordnet ist (203),
• Auswählen von Datensätzen in der Datenbank nach einem Auswahlkriterium, das angibt, dass ein zu selektierender Datensatz einem Ressourcentyp zugeordnet ist, der diesem Auswahlkriterium zugeordnet ist, und einem Nutzertyp, der diesem Auswahlkriterium zugeordnet ist (300), und
• Senden von Batchdaten an das Ratingsystem, wobei die Batchdaten Ressourcenverbrauchsbeschreibungen umfassen, die jeweils in dem entsprechenden ausgewählten Datensatz umfasst sind (301),
wobei das Ratingsystem konfiguriert ist, um die folgenden Schritte als Reaktion auf das Empfangen der Batchdaten von dem Verarbeitungssystem durchzuführen:
• Erzeugen eines Gebührenbetrags für jede der Ressourcenverbrauchsbeschreibungen, die in den Batchdaten umfasst sind (303), und
• Senden von Abrechnungsdaten an das Verarbeitungssystem, wobei die Abrechnungsdaten die Gebührenbeträge umfassen (304).

2. Das Telekommunikationssystem nach Anspruch 1, wobei das Ratingsystem konfiguriert ist, um Gebührenbeträge für die in den Batchdaten umfasste Ressourcenverbrauchsbeschreibung gemäß den Abrechnungsregeln zu erzeugen, wobei jede der Abrechnungsregeln einem entsprechenden Auswahlkriterium einer Menge von Auswahlkriterien zugeordnet ist, die das Auswahlkriterium umfasst, wobei das Ratingsystem konfiguriert ist, um den folgenden Schritt als Reaktion auf das Empfangen der Batchdaten von dem Verarbeitungssystem auszuführen:
• Identifizieren einer Abrechnungsregel, die dem Auswahlkriterium zugeordnet ist (303),
wobei das Erzeugen des Gebührenbetrags für jede der in den Batchdaten umfassten Ressourcenverbrauchsbeschreibungen gemäß der identifizierten Abrechnungsregel ausgeführt wird.

3. Das Telekommunikationssystem nach Anspruch 1, wobei das Ratingsystem konfiguriert ist, um Gebührenbeträge für die in den Batchdaten umfassten Ressourcenverbrauchsbeschreibungen gemäß den Abrechnungsregeln zu erzeugen, die jeweils eine Ressourcenverbrauchsspezifikation aufweisen, wobei jede der Abrechnungsregeln einem entsprechenden Auswahlkriterium einer Menge von Auswahlkriterien zugeordnet ist, die das Auswahlkriterium umfasst, wobei der dem Auswahlkriterium zugeordnete Ressourcentyp der identifizierte Ressourcentyp ist und der dem Auswahlkriterium zugeordnete Nutzertyp der identifizierte Nutzertyp ist, wobei das Ratingsystem konfiguriert ist, um als Reaktion auf das Empfangen der Batchdaten vom Verarbeitungssystem das Folgende auszuführen:
• Identifizieren einer Abrechnungsregel, die besagtem Auswahlkriterium zugeordnet ist (303),
wobei das Erzeugen des Gebührenbetrags für jede der in den Batchdaten umfassten Ressourcenverbrauchsbeschreibungen gemäß der identifizierten Abrechnungsregel ausgeführt wird,
wobei das Ratingsystem konfiguriert ist, um die folgenden Schritte als Reaktion auf das Empfangen der Batchdaten von dem Verarbeitungssystem auszuführen:
• Auswählen einer anderen Abrechnungsregel, wenn die in der empfangenen RUR enthaltene Ressourcenverbrauchsbeschreibung mit einer Ressourcenverbrauchsspezifikation der identifizierten Abrechnungsregel nicht übereinstimmt und mit einer Ressourcenverbrauchsspezifikation der anderen Abrechnungsregel übereinstimmt, wobei die andere Abrechnungsregel einem anderen Auswahlkriterium zugeordnet ist, wobei ein anderer Nutzertyp und der identifizierte Ressourcentyp dem anderen Auswahlkriterium zugeordnet sind (400),
• Senden einer Benachrichtigungsanforderung an das Verarbeitungssystem, die eine Beschreibung der anderen Abrechnungsregel umfasst (401),
wobei das Verarbeitungssystem konfiguriert ist, um als Reaktion auf das Empfangen der Benachrichtigungsanforderung das Folgende auszuführen:
• Senden einer Benachrichtigungsnachricht an die Netzwerkkomponente, die die Beschreibung der anderen Abrechnungsregel umfasst (402),
wobei die Netzwerkkomponente konfiguriert ist, um die folgenden Schritte als Reaktion auf das Empfangen der Benachrichtigungsnachricht auszuführen:
• Auffordern des Nutzers, ob der Nutzer die andere Abrechnungsregel genehmigen möchte (403),
• Senden einer Antwortnachricht an das Verarbeitungssystem, die angibt, dass der Nutzer die andere Abrechnungsregel genehmigt hat, wenn der Nutzer die andere Abrechnungsregel genehmigt hat (404),
wobei die Verarbeitungskomponente konfiguriert ist, um das Folgende als Reaktion auf das Empfangen der Antwortnachricht auszuführen:
• Ausführen eines Rekonfigurationsvorgangs, der das Verarbeitungssystem veranlasst, den anderen Nutzertyp bei der weiteren Ausführung der Identifizierung eines Nutzertyps eines Nutzers unter Verwendung einer Identifikationsinformation, die in einem anderen empfangenen RUR umfasst ist, zu identifizieren, wenn der andere empfangene RUR von der Netzwerkkomponente für die dem Nutzer bereitgestellte Ressource empfangen wird (405).

4. Das Telekommunikationssystem nach Anspruch 1, wobei das Verarbeitungssystem konfiguriert ist, um den folgenden Schritt als Reaktion auf das Empfangen der Abrechnungsdaten vom Ratingsystem durchzuführen:
• Hinzufügen jedes der Gebührenbeträge zu dem entsprechenden Datensatz, der die Ressourcenverbrauchsbeschreibung umfasst, für welche jeder der Gebührenbeträge erzeugt wird (305),
wobei das Telekommunikationssystem ferner ein Rechnungssystem umfasst, das konfiguriert ist, um das Folgende an einem Ende eines dem Nutzer zugeordneten Abrechnungszyklus durchzuführen:
• Senden einer Rechnungsdatenanforderung an das Verarbeitungssystem, die ein dem Nutzer zugeordnetes Datensatzauswahlkriterium und den Abrechnungszyklus umfasst (500),
wobei das Verarbeitungssystem konfiguriert ist, um die folgenden Schritte als Reaktion auf den Empfang der Rechnungsdatenanforderung auszuführen:
• Auswählen anderer Datensätze in der Datenbank, die jeweils eine Identifikationsinformation umfassen, die dem Datensatzauswahlkriterium genügt eines Gebührenbetrags und eine Ressourcenverbrauchsbeschreibung, die anzeigt, dass eine gemäß dieser Ressourcenverbrauchsbeschreibung verbrauchte Ressource während des Abrechnungszyklus verbraucht wurde (501),
• Senden von Rechnungsdaten an das Rechnungssystem, wobei die Rechnungsdaten Gebührenbeträge umfassen, wobei jeder Gebührenbetrag der in den Rechnungsdaten umfassten Gebührenbeträge in dem entsprechenden anderen Datensatz umfasst ist (502),
wobei das Rechnungssystem konfiguriert ist, um den folgenden Schritt als Reaktion auf das Empfangen der Rechnungsdaten auszuführen:
• Erzeugen einer Rechnung unter Verwendung der Rechnungsdaten (503).

5. Das Telekommunikationssystem nach Anspruch 4, wobei das Erzeugen des Gebührenbetrags für jede der in den Batchdaten umfassten Ressourcenverbrauchsbeschreibungen gemäß einer dem Auswahlkriterium zugeordneten Abrechnungsregel ausgeführt wird, wobei das Verarbeitungssystem konfiguriert ist, um als Reaktion auf das Empfangen der Rechnungsdatenanforderung das Folgende auszuführen:
• Zuordnen jedes der anderen Datensätze zu einem Datenmarker, der anzeigt, dass der in jedem der anderen Datensätzen umfasste Gebührenbetrag für die Rechnungsstellung verwendet wird,
wobei das Verarbeitungssystem konfiguriert ist, um die folgenden Schritte als Reaktion auf das Empfangen einer Anforderung zum Zuordnen einer anderen Abrechnungsregel zu dem Auswahlkriterium auszuführen:
• Stornieren der Zuordnung der Abrechnungsregel zum Auswahlkriterium,
• Zuordnung der anderen Abrechnungsregel zum Auswahlkriterium,
• Wiederholen der Auswahl von Datensätzen in der Datenbank gemäß dem Auswahlkriterium, und
• Senden anderer Batchdaten an das Ratingsystem, die Ressourcenverbrauchsbeschreibungen umfassen, die jeweils in dem Datensatz umfasst sind, der bei der Wiederholung der Auswahl der Datensätze in der Datenbank gemäß dem Auswahlkriterium ausgewählt wurde,
wobei das Ratingsystem konfiguriert ist, um die folgenden Schritte als Reaktion auf das Empfangen der anderen Batchdaten von dem Verarbeitungssystem auszuführen:
• Erzeugen eines Gebührenbetrags für jede der in den anderen Batchdaten umfassten Ressourcenverbrauchsbeschreibungen unter Verwendung der anderen Abrechnungsregel, und
• Senden anderer Abrechnungsdaten an das Verarbeitungssystem, die die Gebührenbeträge umfassen, die bei der Erzeugung des Gebührenbetrags für jede der in den anderen Batchdaten umfassten Ressourcenverbrauchsbeschreibungen erzeugt wurde,
wobei das Verarbeitungssystem konfiguriert ist, um den folgenden Schritt als Reaktion auf das Empfangen der anderen Abrechnungsdaten von dem Ratingsystem auszuführen:
• Anhängen jedes der Gebührenbeträge, die in den anderen Abrechnungsdaten umfasst sind, an den jeweiligen Datensatz, der die Ressourcenverbrauchsbeschreibung umfasst, für welche jeder der Gebührenbeträge, die in den anderen Abrechnungsdaten umfasst sind, erzeugt wurde, wenn der jeweilige Datensatz, der die Ressourcenverbrauchsbeschreibung umfasst, für welche jeder der Gebührenbeträge, die in den anderen Abrechnungsdaten umfasst sind, erzeugt wurde, den Gebührenbetrag nicht umfasst oder der jeweilige Datensatz, der die Ressourcenverbrauchsbeschreibung umfasst, für welche jeder der Gebührenbeträge, die in den anderen Abrechnungsdaten umfasst sind, erzeugt wurde, dem Datenmarker zugeordnet ist, ansonsten Ersetzen eines in dem jeweiligen Datensatz umfassten Gebührenbetrags, der die Ressourcenverbrauchsbeschreibung umfasst, für welche jeder der Gebührenbeträge, die in den anderen Abrechnungsdaten umfasst sind, erzeugt wurde, durch jeden der Gebührenbeträge, die in den anderen Abrechnungsdaten umfasst sind.

6. Das Telekommunikationssystem nach Anspruch 5, wobei das Rechnungssystem konfiguriert ist, um den folgenden Schritt an einem Ende eines anderen Abrechnungszyklus, der dem Nutzer zugeordnet ist, auszuführen:
• Senden einer anderen Rechnungsdatenanforderung an das Verarbeitungssystem, die das Datensatzselektionskriterium und den anderen Abrechnungszyklus umfasst,
wobei das Verarbeitungssystem konfiguriert ist, um die folgenden Schritte als Reaktion auf den Empfang der Rechnungsdatenanforderung auszuführen:
• Auswählen anderer Datensätze in der Datenbank, die jeweils entweder eine Identifikationsinformation, die dem Datensatzauswahlkriterium genügt, nur einen Gebührenbetrag und eine Ressourcenverbrauchsbeschreibung umfassen, die anzeigt, dass eine gemäß dieser Ressourcenverbrauchsbeschreibung verbrauchte Ressource während des anderen Abrechnungszyklus verbraucht wurde, oder eine Identifikationsinformation, die dem Datensatzauswahlkriterium genügt, und Gebührenbeträge, und
• Senden anderer Rechnungsdaten an das Rechnungssystem, die Gebührenbeträgen umfassen, die jeweils in dem entsprechenden anderen Datensatz umfasst sind, der bei dem Auswahlen der anderen Datensätze in der Datenbank ausgewählt wurde, die jeweils entweder eine Identifikationsinformation, die dem Datensatzauswahlkriterium genügt, lediglich einen Gebührenbetrag und die Ressourcenverbrauchsbeschreibung umfassen, die angibt, dass die gemäß dieser Ressourcenverbrauchsbeschreibung verbrauchte Ressource während des anderen Abrechnungszyklus verbraucht wurde, oder die Identifikationsinformation, die dem Datensatzauswahlkriterium erfühlt, und die Gebührenbeträge, worin die im selben Datensatz umfassten Gebührenbeträge in den anderen Rechnungsdaten einander zugeordnet sind,
wobei das Rechnungssystem konfiguriert ist, um den folgenden Schritt als Reaktion auf Empfang der anderen Rechnungsdaten durchzuführen:
• Erzeugen einer anderen Rechnung unter Verwendung der anderen Rechnungsdaten, wobei das Erzeugen der anderen Rechnung unter Verwendung der anderen Rechnungsdaten umfasst:
• Angeben eines Gebührenbetrags in der anderen Rechnung, wenn dieser Gebührenbetrag keinen zugeordneten Gebührenbetrag in den anderen Rechnungsdaten hat, und
• Angeben eines Differenzbetrags in der anderen Rechnung für die einander zugeordneten Gebührenbeträge, wobei der Differenzbetrag gleich einem der zugeordneten Gebührenbeträge abzüglich eines weiteren der zugeordneten Gebührenbeträge ist, wobei der eine der zugeordneten Gebührenbeträge nach dem anderen der zugeordneten Gebührenbeträge erzeugt wird.

7. Das Telekommunikationssystem nach Anspruch 4, wobei die Identifikationsinformation des empfangenen RUR eine Geräteidentifikation der Netzwerkkomponente umfasst, wobei das Telekommunikationssystem ein Ressourcenanbieter-System umfasst, das konfiguriert ist, um RURs zu erzeugen, die sich auf Grundgebühren beziehen, um dem Benutzer Zugang zur Ressource zu gewähren, wobei das Ressourcenanbieter-System konfiguriert ist, um den folgenden Schritt auszuführen:
• Senden eines anderen RUR an das Verarbeitungssystem, wobei die andere RUR eine Identifikationsinformation und eine Ressourcenverbrauchsbeschreibung umfasst, wobei die Identifikationsinformation, die in der anderen RUR umfasst ist, die Geräteidentifikation der Netzwerkkomponente umfasst, wobei die Ressourcenverbrauchsbeschreibung, die in der anderen RUR umfasst ist, eine Grundgebühr für die Gewährung des Zugangs zu der Ressource und eine Beschreibung der Ressource umfasst;
wobei das Verarbeitungssystem konfiguriert ist, um die folgenden Schritte auszuführen:
• Empfangen des anderen RUR vom Ressourcenanbieter-System,
• Identifizieren eines Ressourcentyps der Ressource unter Verwendung der Ressourcenverbrauchsbeschreibung, die in der anderen RUR enthalten ist,
• Identifizieren eines Benutzertyps des Benutzers unter Verwendung der Identifikationsinformationen, die in dem anderen RUR enthalten sind,
• Erzeugen eines anderen Datensatzes in der Datenbank, wobei der andere erzeugte Datensatz die in dem anderen RUR umfasste Ressourcenverbrauchsbeschreibung, die in dem anderen RUR umfasste Identifikationsinformation, einen Gebührenbetrag, der gleich der Grundgebühr ist, die in der in dem anderen RUR umfassten Ressourcenverbrauchsbeschreibung umfasst ist, umfasst, wobei der andere Datensatz dem Ressourcentyp, der in dem Identifizieren des Ressourcentyps der Ressource unter Verwendung der in dem anderen RUR umfassten Ressourcenverbrauchsbeschreibung identifiziert wird, und dem Nutzertyp, der in dem Identifizieren des Nutzertyps des Nutzers unter Verwendung der in dem anderen RUR umfassten Identifikationsinformationen identifiziert wird, zugeordnet ist.

8. Das Telekommunikationssystem nach Anspruch 4, wobei das Ratingsystem konfiguriert ist, um Gebührenbeträge für Ressourcenverbrauchsbeschreibungen zu erzeugen, die in Batchdaten gemäß Abrechnungsregeln umfasst sind, die jeweils eine kumulative Ressourcenverbrauchsspezifikation aufweisen, wobei jede der Abrechnungsregeln einem jeweiligen Auswahlkriterium einer Menge von Auswahlkriterien zugeordnet ist, zu der das Auswahlkriterium gehört, wobei das Ratingsystem konfiguriert ist, um eine dem Auswahlkriterium zugeordnete Abrechnungsregel als Reaktion auf das Empfangen der Batchdaten von dem Verarbeitungssystem zu identifizieren, wobei das Erzeugen des Gebührenbetrags für jede der in den Batchdaten umfassten Ressourcenverbrauchsbeschreibungen gemäß der identifizierten Abrechnungsregel ausgeführt wird, wobei die Rechnungsdaten Ressourcenverbrauchsbeschreibungen umfassen, die jeweils in dem anderen Datensatz umfasst sind, wobei das Rechnungssystem konfiguriert ist, die folgenden Schritte auszuführen:
• Berechnen eines kumulativen Ressourcenverbrauchsvolumens der Ressource unter Verwendung der Ressourcenverbrauchsbeschreibungen in den Rechnungsdaten, wobei jede der Ressourcenverbrauchsbeschreibungen in den Rechnungsdaten jeweils den entsprechenden Gebührenbetrag aufweist, der unter Verwendung der identifizierten Abrechnungsregel erzeugt wird (600),
• Auswählen einer anderen Abrechnungsregel, wenn das kumulative Ressourcenverbrauchsvolumen einer kumulativen Ressourcennutzungsspezifikation der anderen Regel entspricht, wobei die andere Abrechnungsregel einem anderen Auswahlkriterium zugeordnet ist, wobei ein anderer Nutzertyp und der identifizierte Ressourcentyp dem anderen Auswahlkriterium zugeordnet sind (601),
• Auffordern des Nutzers, ob der Nutzer die andere Abrechnungsregel genehmigen möchte (602),
• Senden einer Anforderung an das Verarbeitungssystem, die andere Abrechnungsregel für den Nutzer zu verwenden, wenn der Nutzer die andere Abrechnungsregel genehmigt hat (603),
wobei das Verarbeitungssystem konfiguriert ist, um die folgenden Schritte als Reaktion auf das Empfangen der Anforderung zur Verwendung der anderen Abrechnungsregel für den Nutzer auszuführen:
• Ausführen eines Rekonfigurationsvorgangs, der das Verarbeitungssystem veranlasst, den anderen Nutzertyp bei der weiteren Ausführung der Identifizierung eines Nutzertyps unter Verwendung einer Identifikationsinformation, die in einem anderen empfangenen RUR umfasst ist, zu identifizieren, wenn der andere empfangene RUR für die dem Nutzer bereitgestellte Ressource von einer der Netzwerkkomponenten mit einer Geräteidentifikation empfangen wird, die in der Liste der Geräteidentifikation umfasst ist (604).

9. Das Telekommunikationssystem nach Anspruch 1, wobei die Identifikationsinformation des empfangenen RUR eine Geräteidentifikation der Netzwerkkomponente umfasst, wobei der im Schritt des Erzeugens des Datensatzes in der Datenbank erzeugte Datensatz der Geräteidentifikation zugeordnet ist, wobei das Erzeugen des Gebührenbetrags für jede der in den Batchdaten umfassten Ressourcenverbrauchsbeschreibungen gemäß einer dem Auswahlkriterium zugeordneten Abrechnungsregel ausgeführt wird, wobei das Verarbeitungssystem konfiguriert ist, als Reaktion auf einen Empfang einer Anforderung, dem Auswahlkriterium eine andere Abrechnungsregel zuzuordnen, Folgendes durchzuführen (700):
• Stornieren der Zuordnung der Abrechnungsregel zum Auswahlkriterium (701),
• Zuordnen der anderen Abrechnungsregel zu dem Auswahlkriterium (702),
• Senden einer Benachrichtigungsnachricht an Netzwerkkomponenten des Telekommunikationssystems, die jeweils eine dem jeweiligen ausgewählten Datensatz zugeordnete Geräteidentifikation aufweisen, wobei die Benachrichtigungsnachricht eine Beschreibung der anderen Abrechnungsregel umfasst (703).

10. Das Telekommunikationssystem nach Anspruch 9, wobei das Verarbeitungssystem konfiguriert ist, um als Reaktion auf das Empfangen der Anforderung, die andere Abrechnungsregel dem Auswahlkriterium zuzuordnen, Folgendes durchzuführen:
• Senden einer Konfigurationsanweisung an das Ratingsystem, um die andere Abrechnungsregel zum Erzeugen von Gebührenbeträgen zu verwenden, die in Batchdaten umfasst sind, die Ressourcenverbrauchsbeschreibungen enthalten, die in Datensätzen enthalten sind, die gemäß dem Auswahlkriterium ausgewählt werden (705),
wobei das Ratingsystem konfiguriert ist, um das Folgende als Reaktion auf das Empfangen der Konfigurationsanweisung auszuführen:
• Ausführen eines Rekonfigurationsvorgangs, der das Ratingsystem veranlasst, Gebührenbeträge unter Verwendung der anderen Abrechnungsregel bei der weiteren Ausführung des Erzeugens eines Gebührenbetrags für jede der in anderen empfangenen Batchdaten umfassten Ressourcenverbrauchsbeschreibungen zu erzeugen, wenn die anderen empfangenen Daten Ressourcenverbrauchsbeschreibungen umfassen, die in Datensätzen umfasst sind, die gemäß dem Auswahlkriterium ausgewählt sind (706).

11. Das Telekommunikationssystem nach Anspruch 1, wobei das Ratingsystem konfiguriert ist, um Gebührenbeträge für in Batchdaten umfasste Ressourcenverbrauchsbeschreibungen gemäß Abrechnungsregeln zu erzeugen, die jeweils eine kumulative Ressourcenverbrauchsspezifikation aufweisen, wobei jede der Abrechnungsregeln eines jeweiligen Auswahlkriterium einer Menge von Auswahlkriterien zugeordnet ist, zu der das Auswahlkriterium gehört, wobei das Ratingsystem konfiguriert ist, um die folgenden Schritte als Reaktion auf das Empfangen der Batchdaten von dem Verarbeitungssystem auszuführen:
- Berechnen eines kumulativen Ressourcenverbrauchsvolumens unter Verwendung der Batchdaten (800),
- Ausführen des Folgenden, wenn das kumulative Ressourcenverbrauchsvolumen nicht mit einer kumulativen Ressourcenverbrauchsspezifikation einer dem Auswahlkriterium zugeordneten Abrechnungsregel übereinstimmt (801):
- Auswählen einer anderen Abrechnungsregel, wobei das kumulative Ressourcenverbrauchsvolumen einer kumulativen Ressourcenverbrauchsspezifikation der anderen Abrechnungsregel entspricht (802),
- Stornieren der Zuordnung der Abrechnungsregel zu dem Auswahlkriterium (803),
- Zuordnen der anderen Abrechnungsregel zu dem Auswahlkriterium (804),
wobei die Gebührenbeträge bei der Erzeugung des Gebührenbetrags für jede der in den Batchdaten umfassten Ressourcenverbrauchsbeschreibungen unter Verwendung der anderen Abrechnungsregel erzeugt werden, wenn das kumulative Ressourcenverbrauchsvolumen der kumulativen Ressourcenverbrauchsspezifikation der anderen Abrechnungsregel entspricht, wobei die Gebührenbeträge bei der Erzeugung des Gebührenbetrags für jede der in den Batchdaten umfassten Ressourcenverbrauchsbeschreibungen unter Verwendung der Abrechnungsregel erzeugt werden, wenn das kumulative Ressourcenverbrauchsvolumen der kumulativen Ressourcenverbrauchsspezifikation der Abrechnungsregel entspricht.

12. Das Telekommunikationssystem nach Anspruch 4, wobei der im Schritt des Erzeugens des Datensatzes in der Datenbank erzeugte Datensatz der Geräteidentifikation zugeordnet ist, wobei das Datensatzauswahlkriterium eine Liste von Geräteidentifikationen umfasst, wobei das Datensatzauswahlkriterium angibt, dass eine Identifikationsinformation eines zu selektierenden Datensatzes eine beliebige der Geräteidentifikationen der Liste umfasst.

13. Telekommunikationssystem nach Anspruch 11, wobei der im Schritt des Erzeugens des Datensatzes in der Datenbank erzeugte Datensatz der Geräteidentifikation zugeordnet ist, wobei das Ratingsystem konfiguriert ist, um als Reaktion auf einen Empfang der Batchdaten von dem Verarbeitungssystem das Folgende auszuführen:
• Senden einer Benachrichtigungsanforderung an das Verarbeitungssystem, die eine Beschreibung der anderen Abrechnungsregel umfasst, wenn das kumulative Ressourcenverbrauchsvolumen nicht mit der kumulativen Ressourcenverbrauchsspezifikation der dem Auswahlkriterium zugeordneten Abrechnungsregel übereinstimmt;
wobei das Verarbeitungssystem konfiguriert ist, um das Folgende als Reaktion auf das Empfangen der Benachrichtigungsanforderung auszuführen:
• Senden einer Benachrichtigungsnachricht an Netzwerkkomponenten des Telekommunikationssystems, die jeweils eine dem entsprechenden ausgewählten Datensatz zugeordnete Geräteidentifikation aufweisen, wobei die Benachrichtigungsnachricht die Beschreibung der anderen Abrechnungsregel umfasst.

14. Ein computer-implementiertes Verfahren zum Verarbeiten von Ressourcenverbrauchsdatensätzen, RURs, in einem Telekommunikationssystem (100), umfassend ein Ratingsystem (140), eine Datenbank (130), ein Verarbeitungssystem (120) und eine Netzwerkkomponente (101, 102), die konfiguriert ist, um RURs, zu erzeugen, wobei jeder der RURs eine Ressourcenverbrauchsbeschreibung der Nutzung einer der Ressourcen und eine Identifikationsinformation umfassen, die eine Geräteidentifikation der Netzwerkkomponente umfasst, wobei das Verarbeitungssystem konfiguriert ist, um Geräteidentifikationen zu speichern, die jeweils einem entsprechenden Nutzertyp zugeordnet sind, wobei das Verfahren die folgenden Schritte, die durch das Verarbeitungssystem ausgeführt werden, aufweist:
• Empfangen eines RUR von der Netzwerkkomponente für eine Ressource, die einem Nutzer bereitgestellt wird (200),
• Identifizieren eines Ressourcentyps der Ressource unter Verwendung einer Ressourcenverbrauchsbeschreibung, die in dem empfangenen RUR umfasst ist (201),
• Identifizieren eines Nutzertyps des Nutzers unter Verwendung einer Identifikationsinformation, die in dem empfangenen RUR umfasst ist (202), wobei der identifizierte Nutzertyp einer Geräteidentifikation zugeordnet ist, die in der Identifikationsinformation umfasst ist, die in dem empfangenen RUR umfasst ist,
• Erzeugen eines Datensatzes in der Datenbank, wobei der Datensatz die in dem empfangenen RUR umfasste Ressourcenverbrauchsbeschreibung umfasst, wobei der empfangene RUR die Identifikationsinformation umfasst, wobei der Datensatz dem identifizierten Ressourcentyp und dem identifizierten Nutzertyp zugeordnet ist (203),
• Auswählen von Datensätzen in der Datenbank, die jeweils einem Auswahlkriterium genügen, das angibt, dass ein zu selektierender Datensatz einem Ressourcentyp zugeordnet ist, der dem Auswahlkriterium zugeordnet ist, und einem Nutzertyp, der dem Auswahlkriterium zugeordnet ist (300), und
• Senden von Batchdaten an das Ratingsystem, wobei die Batchdaten Ressourcenverbrauchsbeschreibungen umfassen, die jeweils in dem entsprechenden ausgewählten Datensatz umfasst sind (301),
wobei das Verfahren ferner die folgenden Schritte, die durch das Ratingsystem ausgeführt werden, aufweist:
• Erzeugen eines Gebührenbetrags für jede der Ressourcenverbrauchsbeschreibungen, die in den Batchdaten umfasst sind (303), und
• Senden von Abrechnungsdaten an das Verarbeitungssystem, wobei die Abrechnungsdaten die Gebührenbeträge umfassen (304).

15. Ein computerlesbares Medium, auf dem ein computerausführbarer Code zur Ausführung durch einen Computerprozessor gespeichert ist, der ein Computersystem steuert, wobei die Ausführung der Anweisungen des ausführbaren Codes bewirkt, dass der Computerprozessor das computerimplementierte Verfahren nach Anspruch 14 ausführt.

## Revendications

1. Système de télécommunication (100) comprenant un système de cotation (140), un système de traitement (120), une base de données (130), et un composant de réseau (101, 102) configuré pour générer des enregistrements d'utilisations de ressources RUR, comprenant chacun une description d'utilisation de ressource de l'utilisation d'une des ressources et une information d'identification comprenant une identification de dispositif du composant de réseau, la base de données étant configurée pour stocker des enregistrements, le système de traitement étant configuré pour stocker des identifications de dispositifs étant chacun associé à un type d'utilisateur respectif, le système de traitement étant configuré pour exécuter les étapes suivantes :
• la réception d'un RUR à partir d'un composant de réseau pour une ressource procurée à un utilisateur (200),
• l'identification d'un type de ressource de la ressource en utilisant une description d'utilisation de ressource comprise dans le RUR (201) reçu,
• l'identification d'un type d'utilisateur de l'utilisateur en utilisant une information d'identification comprise dans le RUR (202) reçu, où le type d'utilisateur identifié est associé à une identification de dispositif comprise dans l'information d'identification comprise dans le RUR reçu,
• la génération d'un enregistrement dans la base de données, l'enregistrement comprenant la description d'utilisation de ressource comprise dans le RUR reçu, l'information d'identification comprise dans le RUR reçu, l'enregistrement étant associé avec le type de ressource identifié et le type d'utilisateur (203) identifié,
• la sélection d'enregistrements dans la base de données selon un critère de sélection spécifiant qu'un enregistrement à sélectionner est associé avec un type de ressource associé à ce critère de sélection et un type d'utilisateur associé à ce critère de sélection (300), et
• l'envoi d'une donnée de lot au système de cotation, la donnée de lot comprenant des descriptions d'utilisations de ressources, comprises chacune dans l'enregistrement (301) sélectionné respectif (301),
le système de cotation étant configuré pour exécuter les étapes suivantes en réponse à la réception de la donnée de lot à partir du système de traitement :
• la génération d'un montant de frais pour chacune des descriptions d'utilisations de ressources comprise dans la donnée de lot (303), et
• l'envoi d'une donnée de facturation vers le système de traitement, la donnée de facturation comprenant les montants des frais (304).

2. Système de télécommunication selon la revendication 1, dans lequel le système de cotation est configuré pour générer des montants de frais pour une description d'utilisation de ressources comprise dans la donnée de lot selon des règles de facturation, où chacune des règles de facturation est associée à un critère de sélection respectif d'un ensemble de critères de sélection comprenant le critère de sélection,
où le système de cotation est configuré pour exécuter l'étape suivante en réponse à la réception de la donnée de lot provenant du système de traitement :
• l'identification d'une règle de facturation pour le critère de sélection (303),
où la génération du montant de frais pour chacune des descriptions d'utilisations de ressources comprise dans la donnée de lot est exécutée selon la règle de facturation identifiée.

3. Système de télécommunication selon la revendication 1, dans lequel le système de cotation est configuré pour générer des montants de frais pour des descriptions d'utilisations de ressources comprises dans des données de lots selon des règles de facturation ayant chacune une spécification d'utilisation de ressources, où chacune des règles de facturation est associée à un critère de sélection respectif d'un ensemble de critères de sélection comprenant le critère de sélection, où le type de ressource associé au critère de sélection est le type de ressource identifié et le type d'utilisateur associé au critère de sélection est le type d'utilisateur identifié, où le système de cotation est configuré pour exécuter ce qui suit en réponse à la réception de la donnée de lot provenant du système de traitement :
• l'identification d'une règle de facturation associée audit critère de sélection (303),
où la génération du montant de frais pour chacune des descriptions d'utilisations de ressources comprise dans la donnée de lot est exécutée selon la règle de facturation identifiée, où le système de cotation est configuré pour exécuter les étapes suivantes en réponse à la réception de la donnée de lot provenant du système de traitement :
• la sélection d'une nouvelle règle de facturation lorsque la description d'utilisation de ressources comprise dans le RUR reçu n'est pas en conformité avec une spécification d'utilisation de ressources de la règle de facturation identifiée et est en conformité avec une spécification d'utilisation de ressources des autres règles de facturation, où l'autre règle de facturation est associée à un autre critère de sélection, où un autre type d'utilisateur et le type de ressource identifié sont associés à un autre critère de sélection (400),
• l'envoi au système de traitement d'une demande de notification comprenant une description de l'autre règle de facturation (401),
le système de traitement étant configuré pour exécuter ce qui suit en réponse à la réception de la demande de notification :
• l'envoi au composant de réseau d'un message de notification comprenant la description de l'autre règle de facturation (402),
le composant de réseau est configuré pour exécuter les étapes suivantes en réponse à la réception du message de notification :
• l'incitation de l'utilisateur concernant le fait de savoir si l'utilisateur souhaite approuver l'autre règle de facturation (403),
• l'envoi au système de traitement d'un message de réponse indiquant que l'utilisateur a approuvé l'autre règle de facturation, lorsque l'utilisateur a approuvé l'autre règle de facturation(404),
où le composant de traitement est configuré pour exécuter ce qui suit en réponse à la réception du message de réponse :
• l'exécution d'une procédure de reconfiguration faisant en sorte que le système de traitement identifie l'autre type d'utilisateur dans une nouvelle exécution de l'identification d'un type d'utilisateur d'un utilisateur en utilisant une information d'identification comprise dans un autre RUR reçu, lorsque l'autre RUR reçu est reçu à partir du composant de réseau pour la ressource fournie à l'utilisateur (405).

4. Système de télécommunication selon la revendication 1, le système de traitement étant configuré pour exécuter l'étape suivante en réponse à la réception de la base de données de facturation à partir du système de cotation :
• l'ajout de chacun des montants de frais à l'enregistrement respectif comprenant la description d'utilisation de ressource pour laquelle chacun des montants de frais est généré (305),
où le système de télécommunication comprend en outre un système de facturation étant configuré pour exécuter ce qui suit à la fin d'un cycle de facturation associé à l'utilisateur :
• l'envoi au système de traitement d'une demande de données de facture comprenant un critère de sélection enregistré associé à l'utilisateur et au cycle de facturation (500),
le système de traitement étant configuré pour exécuter les étapes suivantes en réponse à la réception de la demande de donnée de facture :
• la sélection d'autres enregistrements dans la base de données, chacun comprenant une information d'identification en conformité avec le critère de sélection d'enregistrement, un montant de frais et une description d'utilisation de ressource indiquant qu'une ressource utilisée selon cette description d'utilisation de ressource est utilisée pendant le cycle de facturation (501),
• l'envoi de données de facture au système de facturation, les données de facture comprenant des montants de frais, chacun compris dans l'autre enregistrement (502) respectif,
le système de facturation étant configuré pour exécuter l'étape suivante en réponse à la réception de les données de facture :
• la génération d'une facture en utilisant les données de facture (503).

5. Système de télécommunication selon la revendication 4, dans lequel la génération du montant de frais pour chacune des descriptions d'utilisations de ressources comprises dans la donnée de lot est exécutée selon une règle de facturation associée au critère de sélection, où le système de traitement étant configuré pour exécuter ce qui suit en réponse à la réception de la demande de donnée de facture :
• l'association de chacun des autres enregistrements avec un marqueur de donnée indiquant que le montant de frais compris dans chacun des autres enregistrements est utilisé pour payer la facture, où le système de traitement est configuré pour exécuter les étapes suivantes en réponse à la réception d'une demande pour associer une autre règle de facturation avec le critère de sélection :
• l'annulation de l'association de la règle de facturation et du critère de sélection,
• l'association de l'autre règle de facturation au critère de sélection,
• la répétition de la sélection d'enregistrements dans la base de données selon le critère de sélection, et
• l'envoi d'une nouvelle donnée de lot au système de codification, la nouvelle donnée de lot comprenant des descriptions d'utilisations de ressources, chacune comprise dans l'enregistrement sélectionné dans la répétition des sélections des enregistrements dans la base de données selon le critère de sélection,
où le système de codification est configuré pour exécuter les étapes suivantes en réponse à la réception de la nouvelle donnée de lot à partir du système de traitement :
• la génération d'un montant de frais pour chacune des descriptions d'utilisations de ressources comprise dans la nouvelle donnée de lot en utilisant la nouvelle règle de facturation, et
• l'envoi d'une nouvelle donnée de facturation au système de traitement, la donnée de facturation comprenant les montants de frais générés dans la génération du montant de frais pour chacune des descriptions d'utilisations de ressources comprise dans la nouvelle donnée de lot,
où le système de traitement est configuré pour exécuter l'étape suivante en réponse à la réception de la nouvelle donnée de facturation à partir du système de codification :
• l'ajout de chacun des montants de frais compris dans la nouvelle donnée de facturation à l'enregistrement respectif comprenant la description d'utilisation de ressource pour laquelle le montant en question des montants de frais compris dans la nouvelle donnée de facturation est généré lorsque l'enregistrement respectif comprenant la description d'utilisation de ressources pour le montant en question des montants de frais compris dans la nouvelle donnée de facturation est généré ne comprend pas le montant de frais ou l'enregistrement respectif comprenant la description d'utilisation de ressources pour laquelle le montant en question des montants de frais compris dans la nouvelle donnée de facturation est généré est associé avec le marqueur de donnée, autrement, la substitution d'un montant de frais compris dans l'enregistrement respectif comprenant la description d'utilisation de ressource pour laquelle le montant en question des montants de frais compris dans la nouvelle donnée de facturation est généré par le montant en question des montants de frais compris dans la nouvelle donnée de facturation.

6. Système de télécommunication selon la revendication 5, dans lequel le système de facturation étant configuré pour exécuter l'étape suivante à une fin d'un nouveau cycle de facturation associé à l'utilisateur :
• l'envoi au système de traitement d'une nouvelle demande de données de facture comprenant le critère de sélection enregistré et le nouveau cycle de facturation,
le système de traitement étant configuré pour exécuter les étapes suivantes en réponse à la réception de la demande de données de facture :
• la sélection d'autres enregistrements dans la base de données, comprenant chacun soit une information d'identification en conformité avec le critère de sélection d'enregistrement, uniquement un montant de frais, et une description d'utilisation de ressources indiquant qu'une ressource utilisée selon cette description d'utilisation de ressource est utilisée durant le nouveau cycle de facturation, soit une information d'identification en conformité avec le critère de sélection d'enregistrement et des montants de frais, et
• l'envoi de nouvelles données de facture au système de facturation, les données de facture comprenant des montants de frais compris chacun dans le nouvel enregistrement respectif choisi dans la sélection des nouveaux enregistrements dans la base de données, chacun comprenant soit une information d'identification en conformité avec le critère de sélection, uniquement un montant de frais et la description d'utilisation de ressource indiquant que la ressource utilisée selon cette description d'utilisation de ressource est utilisée durant le nouveau cycle de facturation, soit une information d'identification en conformité avec le critère de sélection d'enregistrement et les montants de frais, où les montants de frais compris dans le même enregistrement sont associés les uns aux autres dans les nouvelles données de facture,
le système de facturation étant configuré pour exécuter l'étape suivante en réponse à la réception de la nouvelle donnée de facture :
• la génération d'une nouvelle facture utilisant les nouvelles données de facture, où la génération de la nouvelle facture utilisant les nouvelles données de facture comprend :
• la spécification d'un montant de frais dans la nouvelle facture lorsque ce montant de frais n'a pas de montant de frais associé dans les nouvelles données de facture, et
• la spécification d'un montant de frais différentiel dans la nouvelle facture pour les montants de frais associés, où le montant de frais différentiel est égal à l'un des montants de frais associés diminué d'un autre des montants de frais associés,
où le montant des montants de frais associé est généré après le nouveau montant des montants de frais associés.

7. Système de télécommunication selon la revendication 4, dans lequel l'information d'identification du RUR reçu comprend une identification de dispositif du composant de réseau,
où le système de télécommunication comprend un système fournisseur de ressources configuré pour générer des RUR concernant des frais de base pour fournir un accès aux ressources pour un utilisateur, où le système fournisseur de ressources est configuré pour exécuter l'étape suivante :
• l'envoi d'un nouvel RUR au système de traitement, le nouvel RUR comprenant une information d'identification et une description d'utilisation de ressource, l'information d'identification comprise dans le nouvel RUR comprenant l'identification de dispositif du composant de réseau, la description d'utilisation de ressource comprise dans le nouvel RUR comprenant un frais de base pour fournir un accès à la ressource et une description de la ressource
où le système de traitement est configuré pour exécuter les étapes suivantes :
• de réception du nouvel RUR provenant du système fournisseur de ressources,
• d'identification d'un type de ressource de la ressource en utilisant la description d'utilisation de ressource comprise dans le nouvel RUR,
• d'identification d'un type d'utilisateur de l'utilisateur en utilisant l'information d'identification comprise dans le nouvel RUR,
• de génération d'un nouvel enregistrement dans la base de données, le nouvel enregistrement généré comprenant la description d'utilisation de ressource comprise dans le nouvel RUR, l'information d'identification comprise dans le nouvel RUR, un montant de frais étant égal aux frais de base compris dans la description d'utilisation de ressource comprise dans le nouvel RUR, le nouvel enregistrement étant associé avec le type de ressource identifié dans l'identification d'un type de ressource de la ressource en utilisant la description d'utilisation de ressource comprise dans le nouvel RUR et le type d'utilisateur identifié dans l'identification du type d'utilisateur de l'utilisateur en utilisant l'information d'identification comprise dans le nouvel RUR.

8. Système de télécommunication selon la revendication 4, dans lequel le système de cotation est configuré pour générer des montants de frais pour des descriptions d'utilisations de ressources comprises dans des données de lot selon des règles de facturation ayant chacune une spécification d'utilisation de ressource cumulative,
où chacune des règles de facturation est associée à un critère de sélection respectif d'un ensemble de critères de sélection comprenant le critère de sélection, où le système de cotation est configuré pour effectuer une identification d'une règle de facturation associée audit critère de sélection en réponse à la réception des données de lot à partir du système de traitement, où la génération du montant de frais pour chacune des descriptions d'utilisations de ressources comprises dans la donnée de lot est exécutée selon la règle de facturation identifiée, où les données de facture comprennent des descriptions d'utilisations de ressources, chacune comprise dans le nouvel enregistrement respectif, où le système de facturation est configuré pour exécuter les étapes suivantes :
• le calcul d'un volume d'utilisation de ressource cumulatif de la ressource en utilisant les descriptions d'utilisations de ressource dans les données de facture ayant chacune le montant de frais respectif généré en utilisant la règle de facturation (600) identifiée,
• la sélection d'une nouvelle règle de facturation lorsque le volume d'utilisation de ressource cumulatif est en conformité avec une spécification d'utilisation de ressource cumulative de la nouvelle règle, où la nouvelle règle de facturation est associée à un nouveau critère de sélection, où un nouveau type d'utilisateur et le type de ressource identifié sont associés au nouveau critère de sélection (601),
• l'incitation de l'utilisateur concernant le fait de savoir si l'utilisateur souhaite approuver la nouvelle règle de facturation (602),
• l'envoi au système de traitement d'une demande pour utiliser la nouvelle règle de facturation pour l'utilisateur lorsque l'utilisateur a approuvé la nouvelle règle de facturation (603),
où le système de traitement est configuré pour exécuter les étapes suivantes en réponse à la réception de la demande pour utiliser la nouvelle règle de facturation pour l'utilisateur :
• l'exécution d'une procédure de reconfiguration faisant en sorte que le système de traitement identifie le nouveau type d'utilisateur dans une nouvelle exécution de l'identification d'un type d'utilisateur d'un utilisateur en utilisant une information d'identification comprise dans un nouvel RUR reçu, lorsque le nouvel RUR reçu est reçu pour la ressource fournie à l'utilisateur à partir de l'un quelconque des composants de réseau ayant une identification de dispositif comprise dans la liste des identifications de dispositifs (604).

9. Système de télécommunication selon la revendication 1, dans lequel l'information d'identification du RUR reçu comprend une identification de dispositif du composant de réseau,
où, l'enregistrement généré dans l'étape de génération de l'enregistrement dans la base de données est associé avec l'identification de dispositif, où la génération du montant de frais pour chacune des descriptions d'utilisations de ressources comprise dans la donnée de lot est exécutée selon une règle de facturation associée au critère de sélection, où le système de traitement est configuré pour exécuter ce qui suit en réponse à la réception d'une demande pour associer une nouvelle règle de facturation au critère de sélection (700) :
• l'annulation de l'association de la règle de facturation et du critère de sélection (701),
• l'association de la nouvelle règle de facturation au critère de sélection (702),
• l'envoi d'un message de notification aux composants de réseau du système de télécommunication, ayant chacun une identification de dispositif associée avec l'enregistrement sélectionné respectif, le message de notification comprend une description de la nouvelle règle de facturation (703).

10. Système de télécommunication selon la revendication 9, dans lequel le système de traitement est configuré pour exécuter ce qui suit en réponse à la réception de la demande pour associer la nouvelle règle de facturation audit critère de sélection :
• l'envoi d'une instruction de configuration vers le système de cotation pour utiliser la nouvelle règle de facturation pour la génération de montants de frais compris dans la donnée de lot comprenant des descriptions d'utilisations de ressources comprises dans des enregistrements selon le critère de sélection (705),
où le système de cotation est configuré pour exécuter ce qui suit en réponse à la réception de l'instruction de configuration :
• l'exécution d'une procédure de reconfiguration faisant en sorte que le système de cotation génère des montants de frais en utilisant la nouvelle règle de facturation dans une nouvelle exécution de génération d'un montant de frais pour chacune des descriptions d'utilisations de ressources comprise dans une nouvelle donnée de lot reçue lorsque la nouvelle donnée reçue comprend des descriptions d'utilisations de ressources comprises dans des enregistrements sélectionnés en fonction du critère de sélection (706).

11. Système de télécommunication selon la revendication 1, dans lequel le système de cotation est configuré pour générer des montants de frais pour des descriptions d'utilisations de ressources comprises dans des données de lots selon des règles de facturation ayant chacune une spécification d'utilisation de ressource cumulative, où chacune des règles de facturation est associée à un critère de sélection respectif d'un ensemble de critères de sélection comprenant le critère de sélection, où le système de cotation est configuré pour exécuter les étapes suivantes en réponse à la réception de la donnée de lot provenant du système de traitement :
• le calcul d'un volume d'utilisation de ressource cumulatif en utilisant la donnée de lot (800),
• l'exécution de ce qui suit si le volume d'utilisation de ressource cumulatif n'est pas en conformité avec une spécification d'utilisation de ressource cumulative d'une règle de facturation associée au critère de sélection (801) :
• la sélection d'une nouvelle règle de facturation, où le volume d'utilisation de ressource cumulatif est en conformité avec une spécification d'utilisation de ressource cumulative de la nouvelle règle de facturation (802),
• l'annulation de l'association de la règle de facturation et du critère de sélection (803),
• l'association de la nouvelle règle de facturation au critère de sélection (804),
où les montants de frais dans la génération du montant de frais pour chacune des descriptions d'utilisations de ressources comprise dans la donnée de lot sont générés en utilisant la nouvelle règle de facturation si le volume d'utilisation de ressource cumulatif est en conformité avec la spécification d'utilisation de ressource cumulative de la nouvelle règle de facturation, où les montants de frais dans la génération du montant de frais pour chacune des descriptions d'utilisation de ressources comprise dans la donnée de lot sont générés en utilisant la règle de facturation si le volume d'utilisation de ressource cumulatif est en conformité avec la spécification d'utilisation de ressource cumulative de la règle de facturation.

12. Système de télécommunication selon la revendication 4, dans lequel l'enregistrement généré dans l'étape de génération de l'enregistrement dans la base de données est associé à l'identification de dispositif, où le critère de sélection d'enregistrement comprend une liste d'identifications de dispositifs, où le critère de sélection d'enregistrement spécifie qu'une information d'identification d'un enregistrement à sélectionner comprend l'une quelconque des identifications de dispositifs de la liste.

13. Système de télécommunication selon la revendication 11, dans lequel l'enregistrement généré dans l'étape de génération de l'enregistrement dans la base de données est associé à l'identification de dispositif, où le système de cotation est configuré pour exécuter ce qui suit en réponse à la réception de la donnée de lot à partir du système de traitement :
• l'envoi au système de traitement d'une demande de notification comprenant une description de la nouvelle règle de facturation si le volume d'utilisation de ressource cumulatif n'est pas en conformité avec une spécification d'utilisation de ressource cumulative de la règle de facturation associée au critère de sélection ;
où le système de traitement est configuré pour exécuter ce qui suit en réponse à la réception de la demande de notification :
• l'envoi d'un message de notification aux composants de réseau du système de télécommunication, ayant chacun une identification de dispositif associée avec l'enregistrement sélectionné respectif, le message de notification comprend la description de la nouvelle règle de facturation.

14. Procédé mis en oeuvre par ordinateur pour le traitement d'enregistrements d'utilisations de ressources, RUR, dans un système de télécommunication (100) comprenant un système de cotation (140), une base de données (130), un système de traitement (120), et un composant de réseau (101, 102) configuré pour générer des enregistrements d'utilisations de ressources RUR, chacun des RUR comprenant une description d'utilisation de ressource de l'utilisation d'une des ressources et une information d'identification comprenant une identification de dispositif du composant de réseau, le système de traitement étant configuré pour stocker des identifications de dispositifs étant chacune associée à un type d'utilisateur respectif, le procédé comprenant les étapes suivantes exécutée par le système de traitement :
• la réception d'un RUR à partir d'un composant de réseau pour une ressource procurée à un utilisateur (200),
• l'identification d'un type de ressource de la ressource en utilisant une description d'utilisation de ressource comprise dans le RUR (201) reçu,
• l'identification d'un type d'utilisateur de l'utilisateur en utilisant une information d'identification comprise dans le RUR (202) reçu, où le type d'utilisateur identifié est associé à une identification de dispositif comprise dans l'information d'identification comprise dans le RUR reçu,
• la génération d'un enregistrement dans la base de données, l'enregistrement comprenant la description d'utilisation de ressource comprise dans le RUR reçu, l'information d'identification comprise dans le RUR reçu, l'enregistrement étant associé avec le type de ressource identifié et le type d'utilisateur (203) identifié,
• la sélection d'enregistrements dans la base de données, étant chacun en conformité avec un critère de sélection spécifiant qu'un enregistrement à sélectionner est associé avec un type de ressource associé au critère de sélection et un type d'utilisateur associé au critère de sélection (300), et
• l'envoi d'une donnée de lot vers le système de cotation, la donnée de lot comprenant des descriptions d'utilisations de ressources, comprise chacune dans l'enregistrement (301) sélectionné respectif,
le procédé comprenant en outre les étapes suivantes étant exécutées par le système de cotation en réponse à la réception de la donnée de lot à partir du système de traitement :
• la génération d'un montant de frais pour chacune des descriptions d'utilisations de ressources comprise dans la donnée de lot (303), et
• l'envoi d'une donnée de facturation vers le système de traitement, la donnée de facturation comprenant les montants des frais (304).

15. Support lisible par ordinateur ayant un code exécutable par ordinateur y étant stocké pour l'exécution, par un processeur informatique, d'une commande d'un système informatique, où l'exécution des instructions du code exécutable fait en sorte que le processeur informatique exécute le procédé mis en oeuvre par ordinateur selon la revendication 14.
